(19) Europäisches Patentamt
European Patent Office
Office européen des brevets

(11) **EP 4 679 811 A2**

(12) **EUROPEAN PATENT APPLICATION**

(43) Date of publication:
**14.01.2026 Bulletin 2026/03**

(21) Application number: **25214572.7**

(22) Date of filing: **27.08.2021**

(51) International Patent Classification (IPC):
*H04N 1/60* (2006.01)

(52) Cooperative Patent Classification (CPC):
**H04N 1/6033; H04N 1/6038**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.09.2020 JP 2020159131**

(62) Document number(s) of the earlier application(s) in
accordance with Art. 76 EPC:
**21193590.3 / 3 979 614**

(71) Applicant: **SCREEN Holdings Co., Ltd.
Kyoto-shi, Kyoto 602-8585 (JP)**

(72) Inventor: **YOKOUCHI, Kenichi
Kyoto, 602-8585 (JP)**

(74) Representative: **Kilian Kilian & Partner mbB
Zielstattstraße 23a
81379 München (DE)**

Remarks:
This application was filed on 10-11-2025 as a
divisional application to the application mentioned
under INID code 62.

(54) **COLOR CHART DATA CORRECTION METHOD AND COLOR CHART DATA CORRECTION PROGRAM**

(57)      First, an operator adjusts dot percents of halftone patches, so that an input dot percent and an output dot percent are associated for each halftone patch (S401). Next, spectral reflectances of each halftone patch in color chart data are corrected, so that the spectral reflectances corresponding to the output dot percent are associated with the input dot percent for each halftone patch (S402). Finally, a display is shown based on the corrected color chart data (S403).

## Fig.19

**Description**

BACKGROUND OF THE INVENTION

Field of the Invention

The present invention relates to a method for correcting color chart data that holds information of a color chart used when a color obtained by overprinting inks of a plurality of colors (typically, a plurality of colors including spot colors) is predicted, and a program for correcting the color chart data.

Description of Related Art

In recent years, digital printing apparatuses have become popular in the printing industry. However, in the labeling and packaging field, printing (offset printing, gravure printing, flexographic printing, etc.) with printing apparatuses using printing plates (hereinafter referred to as a "conventional printing apparatus" or simply referred to as a "printing apparatus") is still often performed in recent years. Meanwhile, there is an increasing demand for quick delivery for design and content production, and when there are some changes in design or the like in a case in which a conventional printing apparatus is used, cost for recreation of the printing plate or retrogression of the process is high, which is a significant problem. In this respect, a digital printing apparatus does not use a printing plate, and thus, does not need an operation for exchanging or recreating the printing plate. That is, by adopting a digital printing apparatus, it is possible to carry out especially small-lot printing at low cost, and therefore, it is also possible to respond to the demand of quick delivery for design and content production at low cost.

Meanwhile, in the labeling and packaging field, spot colors tend to be often used for enhancing color expression. For this reason, in order to perform printing with a digital printing apparatus using print data generated for printing with a conventional printing apparatus, it is necessary that colors obtained by overprinting spot color inks be predicted and the predicted colors be reproduced with the digital printing apparatus. In the following, prediction values of values (specifically, reflectance or tristimulus values X, Y, and Z in the CIE 1931 XYZ color space) identifying colors obtained by overprinting inks of a plurality of colors is referred to as an "overprint prediction value".

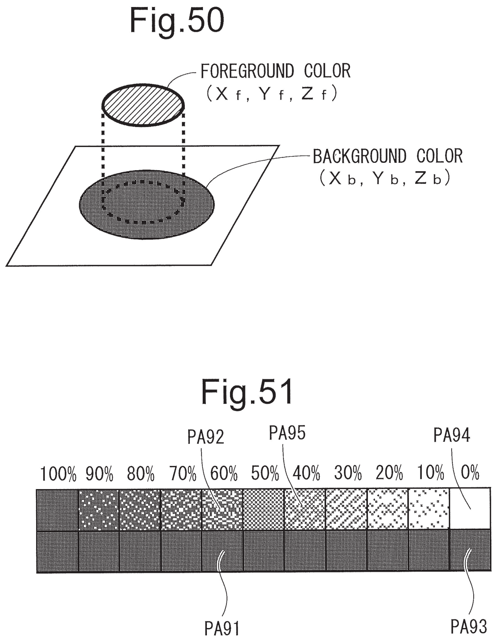

The "Recommendations for predicting spot color overprints" (http://www.color.org/ICC_white_paper_43_Draft2kd.doc) by K. Deshpande and P. Green discloses a method (hereinafter, referred to as "Deshpande et al. method") for relatively easily predicting colors (overprint prediction values) obtained by overprinting inks of a plurality of colors including a spot color. In the Deshpande et al. method, overprint prediction values are expressed as in the following Equations (1) to (3) using tristimulus values X, Y, and Z (see Fig. 50).

$$X = j_x \times (X_b \times X_f) + k_x \quad \dots \quad (1)$$

$$Y = j_y \times (Y_b \times Y_f) + k_y \quad \dots \quad (2)$$

$$Z = j_z \times (Z_b \times Z_f) + k_z \quad \dots \quad (3)$$

Here, $X_b$, $Y_b$, and $Z_b$ are tristimulus values of a background color, $X_f$, $Y_f$, and $Z_f$ are tristimulus values of a foreground color, $j_x$, $j_y$, and $j_z$ are scaling coefficients, and $k_x$, $k_y$, and $k_z$ are constants. Hereinafter, $j_x$, $j_y$, $j_z$, $k_x$, $k_y$, and $k_z$ are collectively referred to as "overprint coefficient".

Meanwhile, color reproduction methods include additive color mixing and subtractive color mixing. In the case of printing, the subtractive color mixing is applied for color reproduction. In this regard, if ideal subtractive color mixing is performed, the stimulus value X of the color obtained by overprinting is represented by "$X_b \times X_f$" (the same applies to the stimulus values Y and Z), for example. However, in order to obtain a more accurate value, it is necessary to make a correction in consideration of an error caused by the use of an opaque ink and reflection of light on the surface. Therefore, in the Deshpande et al. method, a correction using a linear equation is performed as shown in the above Equations (1) to (3).

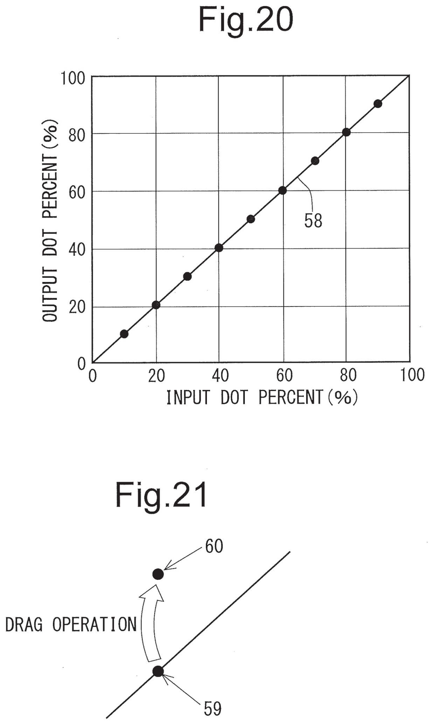

In the Deshpande et al. method, a color chart as schematically shown in Fig. 21 is used, for example. This color chart is called a "CxF chart". In the example shown in Fig. 51, the CxF chart is composed of twenty-two patches. The eleven patches in the upper part are patches obtained by printing an ink of a target spot color on a base material such as paper at a dot percentage in increments of 10%. The eleven patches in the lower part are patches obtained by printing an ink of a target spot color on black (black solid) at a dot percentage in increments of 10%. As above, the CxF chart includes a plurality of patches corresponding to ink densities of a plurality of levels. The overprint prediction value is calculated using the value (colorimetry value) obtained by the colorimetry of the patches in the CxF chart described above.

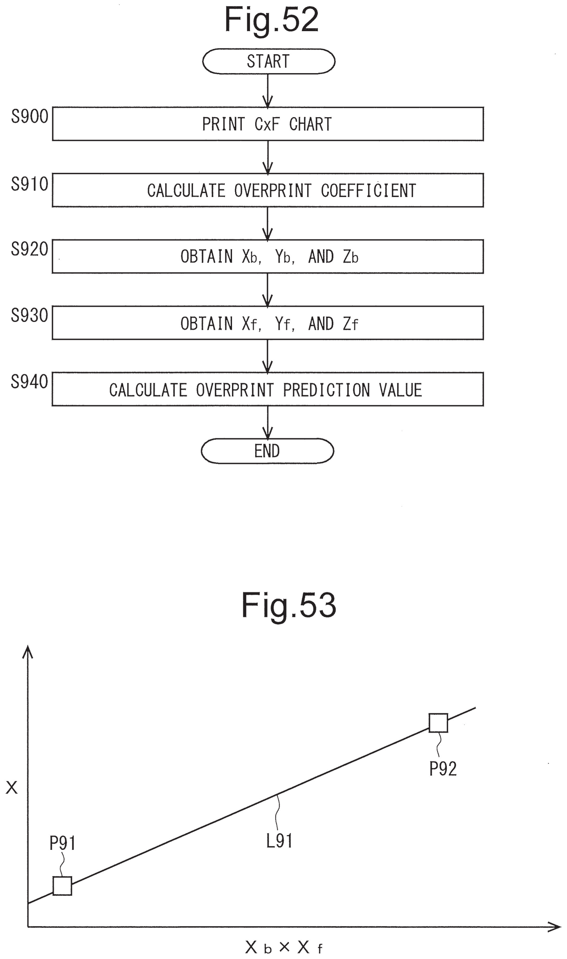

Hereinafter, the Deshpande et al. method will be described in detail with reference to the flowchart in Fig. 52, taking, as an example, calculation of an overprint prediction value in the case where a background color is a spot color at a dot percentage of 40% (referred to as a "spot color 1" for convenience) and a foreground color is another spot color at a dot percentage of 60% (referred to as a "spot color 2" for convenience).

First, the CxF chart is printed using the ink of spot color 1, and further, the CxF chart is printed using the ink of spot color 2 (step S900).

Next, the overprint coefficients $j_x$, $j_y$, $j_z$, $k_x$, $k_y$, and $k_z$ of the above Equations (1) to (3) regarding the spot color 2 are calculated using the CxF chart printed using the ink of spot color 2 (referred to as "spot color 2 chart" for convenience) (step S910). In this regard, focusing on the above Equation (1), for example, the practical maximum value and the minimum value for $X_b \times X_f$ are values obtained by the ink of the spot color 2 being applied on the base material and black (black solid), respectively. The same applies to $Y_b \times Y_f$ and $Z_b \times Z_f$. Therefore, in order to calculate the overprint coefficient, in a coordinate system representing the above Equations (1) to (3) (see Fig. 53. Note that Fig. 53 shows only the coordinate system representing the above Equation (1)), the coordinates representing the stimulus value of a state where the ink of the spot color 2 at a dot percentage of 60% is applied on black are defined as a first calibration point P91, and the coordinates representing the stimulus value of a state where the ink of the spot color 2 at a dot percentage of 60% is applied on the base material are defined as a second calibration point P92.

Focusing on, for example, X among the tristimulus values, values are assigned as follows for the first calibration point P91 with respect to the above Equation (1). The value obtained by colorimetry of the patch PA93 in the spot color 2 chart (black stimulus value) is assigned to $X_b$, the value obtained by colorimetry of the patch PA92 in the spot color 2 chart (stimulus value of a state where the ink of the spot color 2 at a dot percentage of 60% is applied on the base material) is assigned to $X_f$, and the value obtained by colorimetry of the patch PA91 in the spot color 2 chart (stimulus value of a state where the ink of the spot color 2 at a dot percentage of 60% is applied on black) is assigned to X (see Fig. 51). In addition, for the second calibration point P92, values are assigned as follows with respect to the above Equation (1). The value obtained by colorimetry of the patch PA94 in the spot color 2 chart (stimulus value of base material) is assigned to $X_b$, the value obtained by colorimetry of the patch PA92 in the spot color 2 chart (stimulus value of a state where the ink of the spot color 2 at a dot percentage of 60% is applied on the base material) is assigned to $X_f$ and X (see Fig. 51).

The overprint coefficients $j_x$ and $k_x$ are calculated by solving a simultaneous equation consisting of the equation relating to the first calibration point P91 and the equation relating to the second calibration point P92. That is, an equation representing a straight line denoted by reference numeral L91 in Fig. 53 is obtained. The overprint coefficients $j_y$, $j_z$, $k_y$, and $k_z$ are similarly calculated.

Although the patches are provided in 10% increments in the CxF chart shown in Fig. 51, an overprint coefficient corresponding to the dot percentage between two patches which are adjacent to each other in the horizontal direction can be obtained on the basis of the colorimetric values obtained by linear interpolation.

Next, the values of $X_b$, $Y_b$, and $Z_b$ (tristimulus values of the background color) for calculating final overprint prediction values in the above Equations (1) to (3) are obtained using the CxF chart printed using the ink of spot color 1 (referred to as "spot color 1 chart" for convenience) (step S920). Specifically, the values of $X_b$, $Y_b$, and $Z_b$ are obtained by colorimetry of the patch PA95 (see Fig. 51) in the spot color 1 chart.

Next, the values of $X_f$, $Y_f$, and $Z_f$ (tristimulus values of the foreground color) for calculating the final overprint prediction values in the above Equations (1) to (3) are obtained using the spot color 2 chart (step S930). Specifically, the values of $X_f$, $Y_f$, and $Z_f$ are obtained by colorimetry of the patch PA92 (see Fig. 51) in the spot color 2 chart.

Finally, the values obtained in steps S910 to S930 are substituted into the above Equations (1) to (3), whereby the tristimulus values X, Y, and Z as overprint prediction values are calculated (step 5940). This corresponds to, for example, calculating, as the value of X, the ordinate value of the straight line L91 in Fig. 53 when the abscissa indicates the product of "$X_b$ calculated in step S920" and "$X_f$ calculated in step S930".

In the above processing, the values of X, $X_f$, and $X_b$ relating to the first calibration point P91 (see Fig. 53) are obtained by colorimetry of the patches PA91, PA92, and PA93 in the spot color 2 chart. However, if a highly accurate overprint prediction value is not necessary, the first calibration point P91 can be regarded as being located at the origin of the graph in Fig. 53 for simplicity. In this case, the colorimetry of the patches PA91 and PA93 in the spot color 2 chart is not necessary (the colorimetry of the patch PA92 is still necessary for obtaining the values of X and $X_f$ of the second calibration point P92). In this case, the tristimulus values X, Y, and Z as the overprint prediction values can be calculated without printing the lower patch group including the patches PA91 and PA93 in the CxF chart shown in Fig. 51. The CxF chart having the upper patch group shown in Fig. 51 without having the lower patch group is herein referred to as a "simple CxF chart" for convenience.

As described above, according to the Deshpande et al. method, color prediction is performed using a CxF chart, for example, as shown in Fig. 51. However, even when printing using spot colors is performed, such a CxF chart is usually not printed in advance. For this reason, it is necessary to print the same number of CxF charts as the same number of the spot colors and perform colorimetry of the respective patches. This causes an increase in cost and man-hours.

Therefore, the applicant of the present application has invented a method of predicting the spectral reflectances of each patch in a case where the CxF chart is assumed to be printed without actually printing the CxF chart so that the color obtained by overprinting inks of a plurality of colors can be predicted at low cost and with a small number of man-hours (see Japanese Laid-Open Patent Publication No. 2020-102807).

However, the spectral reflectances obtained by the method disclosed in Japanese Laid-Open Patent Publication No. 2020-102807 is merely a predicted value. Therefore, even if printing is executed using the predicted value, a color (printing result) satisfying the user may often not be obtained. In such a case, it is necessary to adjust the color by correcting the spectral reflectances as the predicted values. In addition, there is a case where an error is included in the spectral reflectances obtained by actually performing printing and colorimetry of the CxF chart. In such a case, it is also necessary to adjust the color by correcting the spectral reflectances. However, as will be described later, since one color (color of each patch of the CxF chart) is specified by 36 spectral reflectances, for example, it is extremely difficult for an operator to directly correct the spectral reflectances so that color adjustment is suitably performed.

SUMMARY OF THE INVENTION

Therefore, an object of the present invention is to provide a method by which an operator is able to easily correct information of spectral characteristics (spectral reflectances and the like) of each patch included in a color chart such as a CxF chart.

One aspect of the present invention is directed to a color chart data correction method for correcting color chart data including information of patches of a color chart including a solid patch, a medium color patch, and a plurality of halftone patches, the solid patch being a patch where an ink is applied to a print medium with a maximum ink density, the medium color patch being a patch where the ink is not applied to the print medium, the plurality of halftone patches being patches where the ink is applied to the print medium with a plurality of levels of ink densities between the solid patch and the medium color patch, the color chart data being data in which a dot percent and spectral characteristics are associated with each other for each patch, the color chart data correction method including:

a dot percents adjustment step (S401, S413, S448, S471) of associating, for the plurality of halftone patches, dot percents in the color chart data with dot percents after adjustment by an operator making adjustment of dot percents of halftone patches; and

a spectral characteristics correction step (S402, S414, S449, S472) of, after the dot percents adjustment step, correcting the spectral characteristics of the plurality of halftone patches in the color chart data by a computer, so that, regarding the plurality of halftone patches, spectral characteristics corresponding to the dot percents after adjustment are associated with the dot percents in the color chart data.

According to such a configuration, when the dot percents are adjusted by the operator, the spectral characteristics of the halftone patches in the color chart data are corrected by the computer such that the spectral characteristics (spectral reflectances or the like) corresponding to the dot percents after adjustment are associated with the dot percents before adjustment. In this regard, the adjustment of the dot percents can be performed intuitively, unlike the adjustment of the spectral characteristics. Thus, the operator is able to easily correct information on the spectral characteristics of each patch included in the color chart.

Another aspect of the present invention is directed to a color chart data correction method for correcting color chart data including information of patches of a color chart including a solid patch, a medium color patch, and a plurality of halftone patches, the solid patch being a patch where an ink is applied to a print medium with a maximum ink density, the medium color patch being a patch where the ink is not applied to the print medium, the plurality of halftone patches being patches where the ink is applied to the print medium with a plurality of levels of ink densities between the solid patch and the medium color patch, the color chart data being data in which a dot percent and spectral characteristics are associated with each other for each patch, the color chart data correction method including:

a dot percents-SCTVs conversion step (S421) of converting dot percents of the plurality of halftone patches in the color chart data into SCTVs calculated in accordance with ISO 20654 by a computer;

an SCTVs adjustment step (S422, S427) of, after the dot percents-SCTVs conversion step (S421), associating, for the plurality of halftone patches, the dot percents in the color chart data with SCTVs after adjustment by an operator making adjustment of SCTVs of halftone patches;

an SCTVs-dot percents conversion step (S423, S428) of, after the SCTVs adjustment step (S422, S427), converting the SCTVs after adjustment for the plurality of halftone patches into dot percents by the computer; and

a spectral characteristics correction step (S424, S429) of, after the SCTVs-dot percents conversion step (S423, S428), correcting the spectral characteristics of the plurality of halftone patches in the color chart data by the computer so that, regarding the plurality of halftone patches, the spectral characteristics corresponding to the dot percents obtained in the SCTVs-dot percents conversion step (S423, S428) are associated with the dot percents in the color chart data.

According to such a configuration, when the SCTV specified by ISO 20654 is adjusted by the operator, the SCTVs after adjustment are converted into the dot percents, and the spectral characteristics of the halftone patches in the color chart data are corrected by the computer such that the spectral characteristics (spectral reflectances or the like) corresponding to the dot percents after the conversion are associated with the dot percents before adjustment. In this regard, the adjustment of the SCTV can be performed intuitively, unlike the adjustment of the spectral characteristics. Thus, the operator is able to easily correct information on the spectral characteristics of each patch included in the color chart.

Still another aspect of the present invention is directed to a color chart data correction method for correcting color chart data including information of patches of a color chart including a solid patch, a medium color patch, and a plurality of halftone patches, the solid patch being a patch where an ink is applied to a print medium with a maximum ink density, the medium color patch being a patch where the ink is not applied to the print medium, the plurality of halftone patches being patches where the ink is applied to the print medium with a plurality of levels of ink densities between the solid patch and the medium color patch, the color chart data being data in which a dot percent and spectral characteristics are associated with each other for each patch, the color chart data correction method including:

a dot percents-SCTVs conversion step (S481) of converting dot percents of the plurality of halftone patches in the color chart data into SCTVs calculated in accordance with ISO 20654 by a computer;

a reference candidate color selection step (S482) of selecting, by an operator, a plurality of reference candidate colors that are candidates for a reference color, the reference color being a color for which information on spectral characteristics is referred when spectral characteristics of the plurality of halftone patches in the color chart data are calculated;

an SCTVs adjustment step (S483) of, after the dot percents-SCTVs conversion step (S481) and the reference candidate color selection step (S482), of associating, for the plurality of halftone patches, the dot percents in the color chart data with SCTVs after adjustment by the operator making adjustment of SCTVs of halftone patches;

an SCTVs-dot percents conversion step (S484) of, after the SCTVs adjustment step (S483), converting the SCTVs after adjustment for the plurality of halftone patches into dot percents by the computer for each of the plurality of reference candidate colors;

a spectral characteristics calculation step (S485) of, after the SCTVs-dot percents conversion step (S484), obtaining spectral characteristics corresponding to the dot percents obtained in the SCTVs-dot percents conversion step (S484) for the plurality of halftone patches, by the computer, for each of the plurality of reference candidate colors;

an adjustment result display step (S486) of, after the spectral characteristics calculation step (S485), displaying, by the computer, a plurality of adjustment results respectively corresponding to the plurality of reference candidate colors based on the spectral characteristics obtained in the spectral characteristics calculation step (S485);

an adjustment result selection step (S487) of, after the adjustment result display step (S486), selecting one of the plurality of adjustment results by the operator; and

a spectral characteristics correction step (S488) of correcting, according to the adjustment result selected in the adjustment result selection step (S487), the spectral characteristics of the plurality of halftone patches in the color chart data by the computer, so that, regarding the plurality of halftone patches, the spectral characteristics obtained in the spectral characteristics calculation step (S485) are associated with the dot percents in the color chart data.

According to such a configuration, the operator is able to select a plurality of reference candidate colors that are candidates of a reference color, and adjustment results are displayed respectively for the reference candidate colors after adjustment of the SCTV specified by ISO 20654. Then, the operator is able to select one of the adjustment results, and the spectral characteristics of the halftone patches in the color chart data are corrected by the computer according to the selected adjustment result. Since the operator is able to confirm the adjustment results respectively corresponding to the plurality of reference candidate colors at one time, the adjustment operation for correcting information on the spectral characteristics of each patch included in the color chart can be more efficiently performed.

Still another aspect of the present invention is directed to a color chart data correction program for correcting color chart data including information of patches of a color chart including a solid patch, a medium color patch, and a plurality of halftone patches, the solid patch being a patch where an ink is applied to a print medium with a maximum ink density, the medium color patch being a patch where the ink is not applied to the print medium, the plurality of halftone patches being patches where the ink is applied to the print medium with a plurality of levels of ink densities between the solid patch and the medium color patch, the color chart data being data in which a dot percent and spectral characteristics are associated with each other for each patch, the color chart data correction program causing a computer to execute:

a dot percents adjustment step (S401, S413, S448, S471) of accepting operation of adjustment, by an operator, of dot percents of halftone patches, and associating, for the plurality of halftone patches, dot percents in the color chart data with dot percents after adjustment; and

a spectral characteristics correction step (S402, S414, S449, S472) of, after the dot percents adjustment step, correcting the spectral characteristics of the plurality of halftone patches in the color chart data, so that, regarding the plurality of halftone patches, spectral characteristics corresponding to the dot percents after adjustment are associated with the dot percents in the color chart data.

Still another aspect of the present invention is directed to a color chart data correction program for correcting color chart data including information of patches of a color chart including a solid patch, a medium color patch, and a plurality of halftone patches, the solid patch being a patch where an ink is applied to a print medium with a maximum ink density, the medium color patch being a patch where the ink is not applied to the print medium, the plurality of halftone patches being patches where the ink is applied to the print medium with a plurality of levels of ink densities between the solid patch and the medium color patch, the color chart data being data in which a dot percent and spectral characteristics are associated with each other for each patch, the color chart data correction program causing a computer to execute:

a dot percents-SCTVs conversion step (S421) of converting dot percents of the plurality of halftone patches in the color chart data into SCTVs calculated in accordance with ISO 20654;

an SCTVs adjustment step (S422, S427) of, after the dot percents-SCTVs conversion step (S421), accepting adjustment of SCTVs of halftone patches by an operator, and associating, for the plurality of halftone patches, the dot percents in the color chart data with SCTVs after adjustment;

an SCTVs-dot percents conversion step (S423, S428) of, after the SCTVs adjustment step (S422, S427), converting the SCTVs after adjustment for the plurality of halftone patches into dot percents; and

a spectral characteristics correction step (S424, S429) of, after the SCTVs-dot percents conversion step (S423, S428), correcting the spectral characteristics of the plurality of halftone patches in the color chart data so that, regarding the plurality of halftone patches, the spectral characteristics corresponding to the dot percents obtained in the SCTVs-dot percents conversion step (S423, S428) are associated with the dot percents in the color chart data.

Still another aspect of the present invention is directed to a color chart data correction program for correcting color chart data including information of patches of a color chart including a solid patch, a medium color patch, and a plurality of halftone patches, the solid patch being a patch where an ink is applied to a print medium with a maximum ink density, the medium color patch being a patch where the ink is not applied to the print medium, the plurality of halftone patches being patches where the ink is applied to the print medium with a plurality of levels of ink densities between the solid patch and the medium color patch, the color chart data being data in which a dot percent and spectral characteristics are associated with each other for each patch, the color chart data correction program causing a computer to execute:

a dot percents-SCTVs conversion step (S481) of converting dot percents of the plurality of halftone patches in the color chart data into SCTVs calculated in accordance with ISO 20654;

a reference candidate color selection step (S482) of accepting selection by an operator of a plurality of reference candidate colors that are candidates for a reference color, the reference color being a color for which information on spectral characteristics is referred when spectral characteristics of the plurality of halftone patches in the color chart data are calculated;

an SCTVs adjustment step (S483) of, after the dot percents-SCTVs conversion step (S481) and the reference candidate color selection step (S482), accepting adjustment by the operator of SCTVs of halftone patches, and associating, for the plurality of halftone patches, the dot percents in the color chart data with SCTVs after adjustment;

an SCTVs-dot percents conversion step (S484) of, after the SCTVs adjustment step (S483), converting the SCTVs after adjustment for the plurality of halftone patches into dot percents for each of the plurality of reference candidate colors;

a spectral characteristics calculation step (S485) of, after the SCTVs-dot percents conversion step (S484), obtaining spectral characteristics corresponding to the dot percents obtained in the SCTVs-dot percents conversion step (S484) for the plurality of halftone patches for each of the plurality of reference candidate colors;

an adjustment result display step (S486) of, after the spectral characteristics calculation step (S485), displaying a plurality of adjustment results respectively corresponding to the plurality of reference candidate colors based on the spectral characteristics obtained in the spectral characteristics calculation step (S485);

an adjustment result selection step (S487) of, after the adjustment result display step (S486), accepting selection of one of the plurality of adjustment results by the operator; and

a spectral characteristics correction step (S488) of correcting, according to the adjustment result selected in the adjustment result selection step (S487), the spectral characteristics of the plurality of halftone patches in the color chart data, so that, regarding the plurality of halftone patches, the spectral characteristics obtained in the spectral characteristics calculation step (S485) are associated with the dot percents in the color chart data.

These and other objects, features, modes, and advantageous effects of the present invention will become more apparent from the following detailed description of the present invention with reference to the accompanying drawings.

BRIEF DESCRIPTION OF THE DRAWINGS

Fig. 1 is a diagram for describing terms regarding a CxF chart used herein.
Fig. 2 is a diagram showing an overall configuration of a printing system according to all embodiments.
Fig. 3 is a diagram for describing color chart data.
Fig. 4 is a diagram showing a hardware configuration of a print data generation apparatus according to all the embodiments.
Fig. 5 is a flowchart showing an example of an overall processing flow according to all the embodiments.
Fig. 6 is a diagram for describing an overview of a neural network prediction method.
Fig. 7 is a diagram illustrating an example of a structure of a neural network used in the neural network prediction method.
Fig. 8 is a diagram for describing a process of the neural network prediction method during learning.
Fig. 9 is a diagram for describing, regarding the neural network prediction method, that the neural network is prepared for each color prediction target patch.
Fig. 10 is a flowchart showing a procedure of a color prediction process (color prediction process by the neural network prediction method) of predicting spectral reflectances of second type patches.
Fig. 11 is a flowchart showing a procedure for obtaining teaching data regarding the neural network prediction method.
Fig. 12 is a block diagram for describing details of acquisition of the teaching data regarding the neural network prediction method.
Fig. 13 is a flowchart showing a schematic procedure of the color prediction process of predicting spectral reflectances of first type patches.
Fig. 14 is a diagram for describing selection of a reference color regarding the color prediction process.
Fig. 15 is a diagram for describing normalization when a relational expression is calculated regarding the color prediction process.
Fig. 16 is a diagram for describing combination data regarding the color prediction process.
Fig. 17 is a diagram for describing calculation of a relational expression regarding the color prediction process.
Fig. 18 is a diagram illustrating an example of one plot regarding the color prediction process.
**Fig.** 19 is a flowchart showing a procedure of a color chart data correction process according to a first embodiment of the present invention.
Fig. 20 is a diagram illustrating an example of a graph displayed at the time of adjustment of dot percents in the first embodiment.
**Fig.** 21 is a diagram for describing an operation by an operator when the dot percents are adjusted in the first embodiment.
Fig. 22 is a diagram illustrating an example of a graph displayed after the adjustment operation of the dot percents in the first embodiment.
Fig. 23 is a diagram illustrating an example of a conversion table generated as a result of the adjustment operation of the dot percents in the first embodiment.
**Fig.** 24 is a diagram for describing correction of the spectral reflectances in the first embodiment.
Fig. 25 is a diagram illustrating an example of a dialog displayed after the correction of information on the spectral reflectances in color chart data in the first embodiment.
**Fig.** 26 is a diagram showing another example of the dialog displayed after the correction of information on the spectral reflectances in the color chart data in the first embodiment.
**Fig.** 27 is a diagram for describing adjustment of the dot percents by drag operation of only one point in the first embodiment.
**Fig.** 28 is a diagram for describing the adjustment of the dot percents by the drag operation of only one point in the first embodiment.
Fig. 29 is a diagram illustrating an example of a tabular form input screen for adjusting the dot percents in the first embodiment.
**Fig.** 30 is a flowchart showing a procedure of a color chart data correction process according to a second embodiment of the present invention.
Fig. 31 is a diagram illustrating an example of a dialog displayed at the time of the color chart data correction process in the second embodiment.

Fig. 32 is a diagram for describing conversion from dot percents to SCTVs in a third embodiment of the present invention.

Fig. 33 is a diagram for describing a flow of adjustment of the dot percents in the third embodiment.

**Fig.** 34 is a diagram for describing mutual conversion between the dot percents and the SCTVs in the third embodiment.

Fig. 35 is a diagram for describing adjustment of the SCTVs and change of the reference color by an operator in the third embodiment.

Fig. 36 is a flowchart showing a procedure of a color chart data correction process according to the third embodiment.

Fig. 37 is a diagram illustrating an example of a graph displayed at the time of adjustment of the SCTVs in the third embodiment.

Fig. 38 is a diagram for describing the adjustment of the SCTVs in the third embodiment.

Fig. 39 is a diagram illustrating an example of a graph displayed after the adjustment operation of the SCTVs in the third embodiment.

Fig. 40 is a diagram illustrating an example of a dialog displayed at the time of the color chart data correction process in the third embodiment.

Fig. 41 is a diagram for describing correction of the spectral reflectances in the third embodiment.

Fig. 42 is a diagram for describing conversion of the dot percents when the reference color is changed in a first modification.

Fig. 43 is a flowchart showing a procedure of the color chart data correction process in the first modification.

Fig. 44 is a diagram illustrating an example of adjustment of the dot percents in a second modification.

Fig. 45 is a diagram for describing that a CIELAB values are obtained when the reference color is changed in the second modification.

Fig. 46 is a flowchart showing a procedure of the color chart data correction process in a second modification.

Fig. 47 is a flowchart showing a procedure of the color chart data correction process in the third modification.

Fig. 48 is a diagram illustrating an example of a dialog including adjustment results (prediction results) for respective reference candidate colors in the third modification.

Fig. 49 is a diagram illustrating an example of a graph for adjustment operation in a fourth modification.

Fig. 50 is a diagram for describing a Deshpande et al. method in relation to a conventional example.

Fig. 51 is a diagram schematically illustrating an example of a CxF chart in relation to the conventional example.

Fig. 52 is a flowchart for describing the Deshpande et al. method in relation to the conventional example.

Fig. 53 is a diagram for describing the Deshpande et al. method in relation to the conventional example.

DETAILED DESCRIPTION OF PREFERRED EMBODIMENT

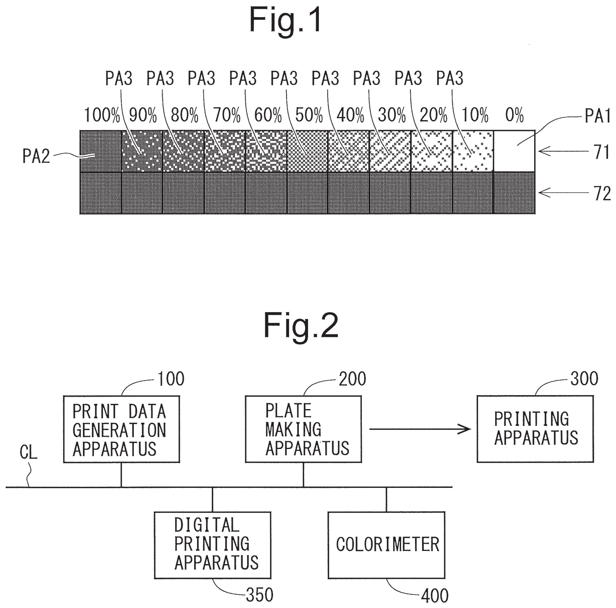

First, terms used in the following description will be described with reference to a CxF chart illustrated in Fig. 1. Upper patches in the CxF chart (patches of the part denoted by reference numeral 71 in Fig. 1) (patches obtained by applying a target ink on a print medium (base material) such as printing paper) are referred to as "first type patches", and lower patches in the CxF chart (patches of the part denoted by reference numeral 72 in Fig. 1) (patches obtained by applying a target ink on black) are referred to as "second type patches". Furthermore, a patch representing the color of the print medium itself (patch denoted by reference numeral PA1 in Fig. 1) is referred to as a "medium color patch", a patch in a state where the target ink is applied solidly (with maximum ink density) on the print medium (patch denoted by reference numeral PA2 in Fig. 1) is referred to as a "solid patch", and patches other than the medium color patch PA1 and the solid patch PA2 (patches denoted by reference numeral PA3 in Fig. 1) among the first type patches 71 are referred to as "halftone patches". The simple CxF chart described above is a CxF chart including only the first type patches 71.

An embodiment of the present invention will now be described with reference to the accompanying drawings. In the following description, a case in which the spectral reflectances are obtained in increments of 10 nm in the wavelength range from 380 nm to 730 nm (that is, a case where one color is specified by 36 spectral reflectances) will be described. However, the present invention is not limited to such a case, and the present invention can also be applied to a case where spectral reflectances of the number obtained by dividing a wavelength range including a range from 400 nm to 700 nm by a unit wavelength range of an appropriate size are obtained.

<0. Matters common to all embodiments>

Before describing each embodiment, matters common to all embodiments will be described.

<0.1 Overall configuration of printing system>

Fig. 2 is a diagram showing an overall configuration of a printing system according to all embodiments of the present invention. The printing system includes: a print data generation apparatus 100 that generates print data by performing various processes on submitted data such as a PDF file; a plate making apparatus 200 that produces a printing plate on the basis of the print data; a printing apparatus 300 that performs printing using the printing plate manufactured by the plate making apparatus 200; a digital printing apparatus 350 such as an inkjet printer or copier that performs printing on the basis of the print data which is digital data without using the printing plate; and a colorimeter 400 for measuring a color. The print data generation apparatus 100, the plate making apparatus 200, the digital printing apparatus 350, and the colorimeter 400 are communicably interconnected by a communication line CL. Note that the colorimeter 400 used in the present embodiment is a spectral colorimeter.

According to this printing system, the print data generation apparatus 100 performs a color prediction process for predicting a color of each patch when a CxF chart (color chart) is assumed to be created by applying an ink of a prediction target color (any spot color ink) on printing paper with ink densities of a plurality of levels. Specifically, the predicted values of the spectral reflectances of the nine patches among the 11 first type patches 71 excluding the medium color patch PA1 and the solid patch PA2 (that is, nine halftone patches PA3) and the predicted values of the spectral reflectances of the 11 second type patches 72 are obtained by the color prediction process (see Fig. 1). However, the predicted values of the spectral reflectances of the first type patches 71 and the predicted values of the spectral reflectances of the second type patches 72 are calculated by different methods.

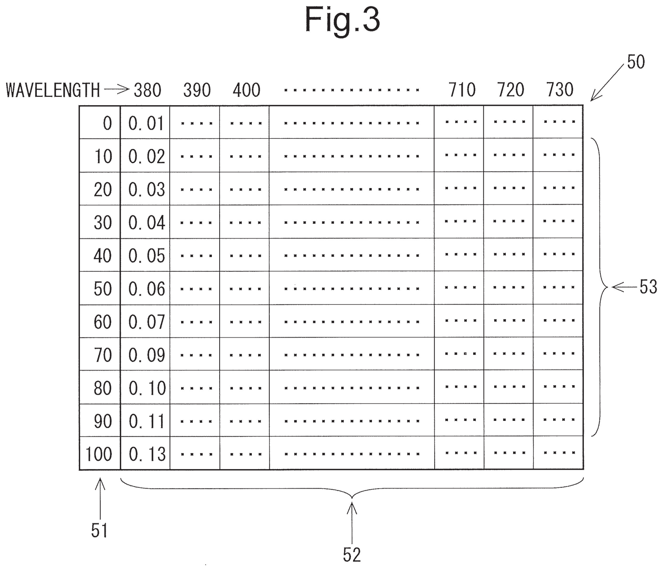

Furthermore, the print data generation apparatus 100 performs a process of correcting the predicted values of the spectral reflectances obtained by the color prediction process. In this regard, information on a dot percent (the dot percent corresponds to a gradation value) and spectral reflectances of each patch of the CxF chart are held as color chart data 50 as schematically illustrated in Fig. 3. Note that Fig. 3 illustrates only information about the first type patches 71. Regarding Fig. 3, information of a portion denoted by reference numeral 51 is information on the dot percents, and information of a portion denoted by reference numeral 52 is information on the spectral reflectances (information on reflectances corresponding to wavelengths in 10% increments). Furthermore, information of a portion denoted by reference numeral 53 is information related to the halftone patches PA3 described above. The print data generation apparatus 100 performs a process of correcting the color chart data 50 as described above. More specifically, the print data generation apparatus 100 performs a process of correcting information on the spectral reflectances of the halftone patches PA3 in the color chart data 50 (hereinafter, referred to as a "color chart data correction process").

Further, the print data generation apparatus 100 performs an overprint prediction process for predicting a color obtained by overprinting inks of a plurality of colors (typically, a color of a portion where a plurality of spot color inks are overprinted or a portion where a spot color ink and a process color ink are overprinted). In the overprint prediction process, information on spectral reflectances obtained in the color prediction process (including information corrected in the color chart data correction process) is used as necessary. Further, the print data generation apparatus 100 also performs a process for converting the data obtained by the overprint prediction process into print data in a format that can be printed by the digital printing apparatus 350. Note that, as a specific method of the overprint prediction process, the above-described Deshpande et al. method may be employed, or another method may be employed.

<0.2 Configuration of print data generation apparatus>

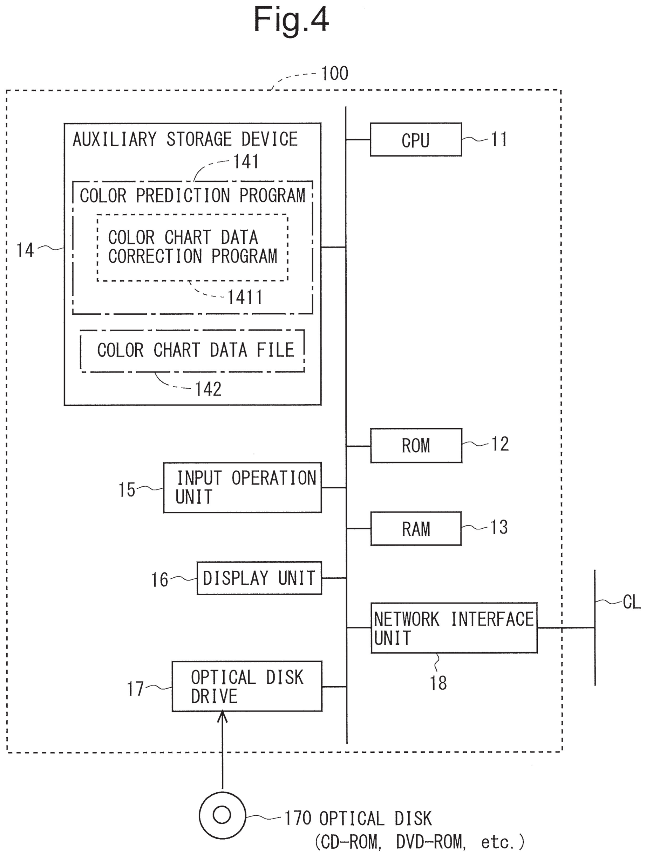

Fig. 4 is a diagram showing a hardware configuration of the print data generation apparatus 100 in the present embodiment. The print data generation apparatus 100 is implemented by a personal computer, and includes a CPU 11, a ROM 12, a RAM 13, an auxiliary storage device 14, an input operation unit 15 such as a keyboard, a display unit 16, an optical disk drive 17, and a network interface unit 18. The submitted data transmitted through the communication line CL is inputted into the print data generation apparatus 100 via the network interface unit 18. Print data generated by the print data generation apparatus 100 is sent to the digital printing apparatus 350 through the communication line CL via the network interface unit 18.

A color prediction program 141 for performing the color prediction process is stored in the auxiliary storage device 14. The color prediction program 141 includes a color chart data correction program 1411 for performing the color chart data correction process as a subprogram. The color chart data 50 is stored in the auxiliary storage device 14 in the form of a file. That is, a color chart data file 142 is stored in the auxiliary storage device 14. The color prediction program 141 is provided by being stored in a computer readable recording medium such as a CD-ROM or a DVD-ROM. That is, the user purchases, for example, an optical disk (CD-ROM, DVD-ROM, etc.) 170 as a recording medium for the color prediction program 141, mounts the optical disk 170 on the optical disk drive 17, reads the color prediction program 141 from the optical disk 170, and installs the read program in the auxiliary storage device 14. Alternatively, the color prediction program 141 sent via the communication line CL may be received by the network interface unit 18 and installed in the auxiliary storage device 14. When the color chart data correction process is performed, the color chart data 50 is held in the RAM 13 by the CPU 11 reading the color chart data file 142.

<0.3 Overall processing flow>

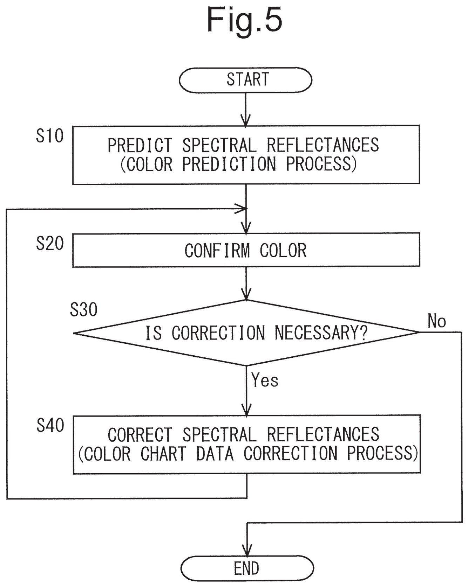

Fig. 5 is a flowchart showing an example of an overall processing flow according to all the embodiments. First, the color prediction process is performed by the print data generation apparatus 100 (step S10). That is, a process of obtaining the predicted values of the spectral reflectances of each patch of the CxF chart is performed. Thereafter, the operator confirms whether or not a desired color has been obtained based on the printed matter outputted using the predicted values, the image displayed on the display unit 16, and the like (step S20). Then, it is determined whether or not it is necessary to correct the predicted values of the spectral reflectances in the color chart data 50 (step S30). If, as a result, it is determined that there is no need for correction, the entire process illustrated in Fig. 5 ends. On the other hand, if it is determined that the correction is necessary, the print data generation apparatus 100 performs the process of correcting the predicted values of the spectral reflectances in the color chart data 50 (the above-described color chart data correction process) (step S40). After step S40 ends, the process returns to step S20.

In the example shown here, the predicted values of the spectral reflectances obtained by the color prediction process are corrected by the color chart data correction process, but the present invention is not limited thereto. The spectral reflectances obtained by actually performing the printing and the colorimetry of the CxF chart may be corrected by the color chart data correction process.

<0.4 Color prediction process>

Here, the color prediction process of obtaining the predicted values of the spectral reflectances of each patch of the CxF chart (the process of step S10 in Fig. 5) will be described.

The spectral reflectances of the solid patch PA2 can be obtained by performing colorimetry on a portion of the corresponding color included in, for example, a colored ball or printed matter. Further, the spectral reflectances of the solid patch PA2 can be substituted with the spectral reflectances obtained by colorimetry of a color sample of the corresponding color. This is because the color sample represents a target color when the corresponding color is solidly applied. The spectral reflectances of the medium color patch PA1 are obtained by colorimetry of a portion on the print medium where nothing is printed. Further, if the same print medium is used in printing, the spectral reflectances of the medium color patch PA1 are constant regardless of an ink color. Therefore, even when processing is performed for inks of a plurality of colors, the spectral reflectances of the medium color patch PA1 needs to be measured only once, as long as the same print medium is used. In this manner, spectral reflectances that are a colorimetric values can be relatively easily obtained for the solid patch PA2 and the medium color patch PA1 among 22 patches constituting the CxF chart.

Regarding 20 patches among 22 patches constituting the CxF chart except for the solid patch PA2 and the medium color patch PA1, the accurate spectral reflectances can be only obtained by colorimetry of a color actually printed on the print medium or black. However, it is considered that, focusing on a plurality of spot colors having similar hues, the spectral reflectances of the plurality of spot colors are close to each other regarding the 20 patches described above. If the same print medium is used in printing, it is considered that the spectral reflectances of the solid patch PA2 and the spectral reflectances of each of the 20 patches have a certain relationship.

In view of the above, the applicant of the present invention has attempted a method (hereinafter referred to as a "neural network prediction method" for convenience) in which the above 20 patches are specified as color prediction target patches, and after the relationship between the spectral reflectances of the solid patch PA2 and the spectral reflectances of each of the color prediction target patches is preliminarily learned by a neural network, the spectral reflectances of the color prediction target patch for a prediction target color are predicted using the learned neural network.

According to the neural network prediction method, predicted values having no problem for practical use can be obtained for the second type patches 72 among the 20 patches, but unfortunately, sufficiently accurate predicted values cannot be obtained for the first type patches 71 among the 20 patches, particularly when there is little data used for learning. Therefore, in this printing system, the spectral reflectances are predicted using the neural network prediction method only for the second type patches 72, and the spectral reflectances for the first type patch 71 are predicted using a method different from the neural network prediction method.

<0.4.1 Prediction of spectral reflectances of second type patch>

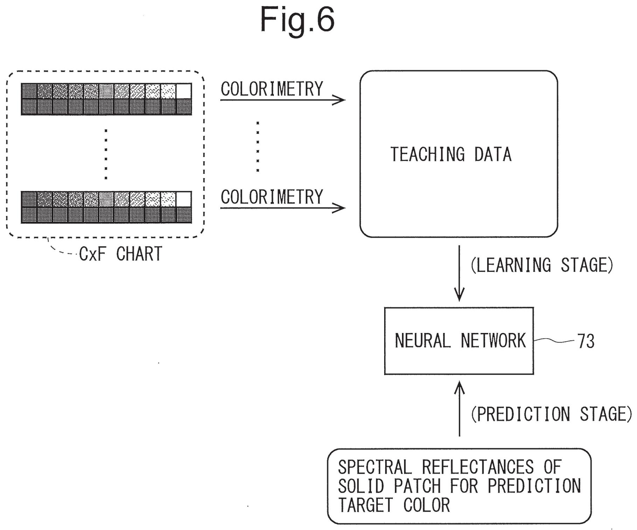

First, the color prediction process for predicting the spectral reflectances of the second type patches 72 will be described. For the prediction of the spectral reflectances of the second type patches 72, the neural network prediction method is adopted. Fig. 6 is a diagram for describing an overview of the neural network prediction method. As described above, the spectral reflectances can be obtained relatively easily for the solid patches PA2 among the patches constituting the CxF chart. Therefore, a color prediction model for predicting the spectral reflectances of the color prediction target patch from the spectral reflectances of the solid patches PA2 is constructed using each of the second type patches 72 as the color prediction target patch. Then, using the constructed color prediction model, the spectral reflectances of the color prediction target patch for the prediction target color are predicted.

The color prediction model is implemented by a neural network 73 that performs machine learning (see Fig. 6). The color prediction process is roughly classified into a learning stage process and a prediction (inference) stage process. In the learning stage, teaching data (training data) is given to the neural network 73, and machine learning using the teaching data is performed in the neural network 73. The neural network 73 is given spectral reflectances obtained by colorimetry of the patches in the CxF chart as teaching data. Here, one piece of teaching data is composed of 36 spectral reflectances obtained by colorimetry of the solid patch PA2 and 36 spectral reflectances obtained by colorimetry of one color prediction target patch. In the prediction stage, the spectral reflectances of the solid patch PA2 for the prediction target color are given to the learned neural network 73. As a result, the spectral reflectances (predicted values) of the color prediction target patch for the prediction target color are outputted from the neural network 73.

By using this color prediction model, also for a spot color for which the CxF chart is not printed, the spectral reflectances of all the second type patches 72 may be obtained assuming that the CxF chart is printed.

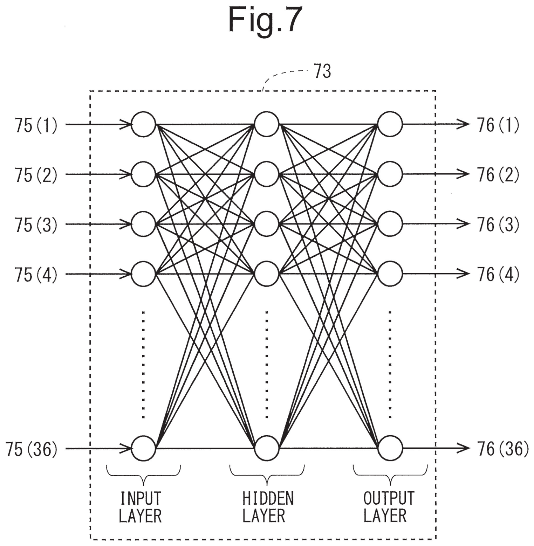

Fig. 7 is a diagram illustrating an example of a structure of the neural network 73 used in the neural network prediction method. The neural network 73 includes an input layer, a hidden layer (intermediate layer), and an output layer. The input layer is composed of 36 units (neurons) that receive 36 spectral reflectances 75(1) to 75(36). The hidden layer is also composed of 36 units. However, the number of units in the hidden layer is not limited to 36. In the example shown in Fig. 7, the number of layers of hidden layers is 1, but the number of layers of hidden layers may be 2 or more. The output layer is composed of 36 units that output 36 spectral reflectances 76(1) to 76(36).

The input layer and the hidden layer are fully connected, and the hidden layer and the output layer are also fully connected. A sigmoid function is adopted as the activation function of the hidden layer and the output layer. However, a function other than the sigmoid function may be adopted as the activation function.

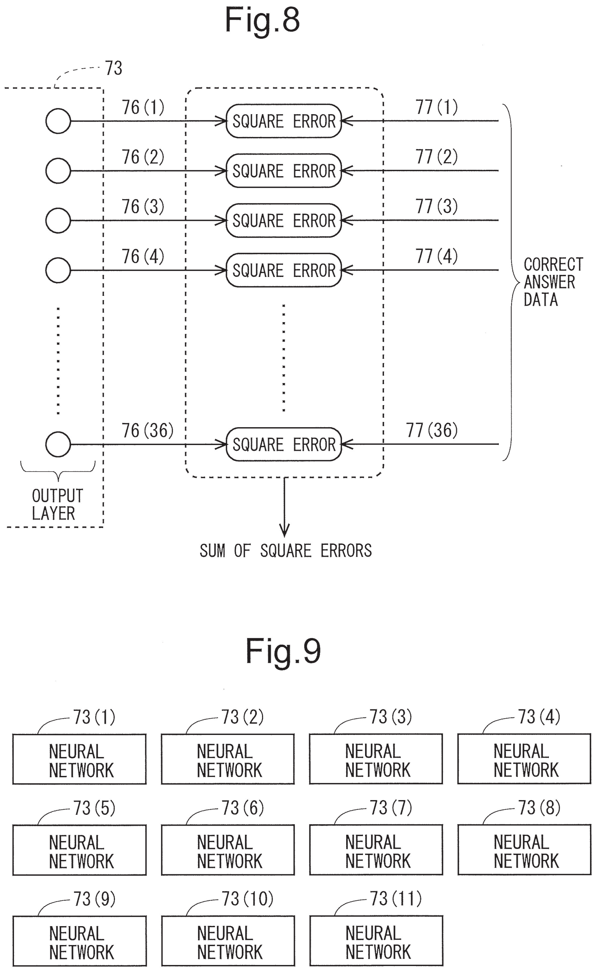

During learning using this neural network 73, the spectral reflectances 75(1) to 75(36) are given to the input layer. As a result, forward propagation is performed in the neural network 73, and the sum of square errors of the spectral reflectances 76(1) to 76(36) outputted from the output layer and the spectral reflectances 77(1) to 77(36) which are correct answer data is obtained (see Fig. 8). Then, the parameters (weighting coefficient and bias) of the neural network 73 are updated by using the gradient descent method based on the result obtained by the back propagation of the errors. The above parameters are optimized by repeating the learning as described above. As a learning method, batch learning may be used in which all pieces of teaching data are given to the neural network 73 in a collective manner, mini-batch learning may be used in which teaching data is divided into a plurality of groups, and the teaching data is given to the neural network 73 for each group, or online learning may be used in which teaching data is given to the neural network 73 one by one.

During prediction (inference) using this neural network 73, the spectral reflectances 75(1) to 75(36) of the solid patch PA2 for the prediction target color are given to the input layer. The spectral reflectances 76(1) to 76(36) outputted from the output layer by the forward propagation process in the neural network 73 are treated as the predicted values of the spectral reflectances of the color prediction target patch for the prediction target color.

Meanwhile, the neural network 73 shown in Fig. 7 is prepared for each color prediction target patch. In this example, since 11 patches (second type patches 72) are specified as the color prediction target patches, 11 neural networks 73(1) to 73(11) are prepared as shown in Fig. 9. Then, learning and prediction (inference) are performed for each color prediction target patch using the corresponding neural network 73.

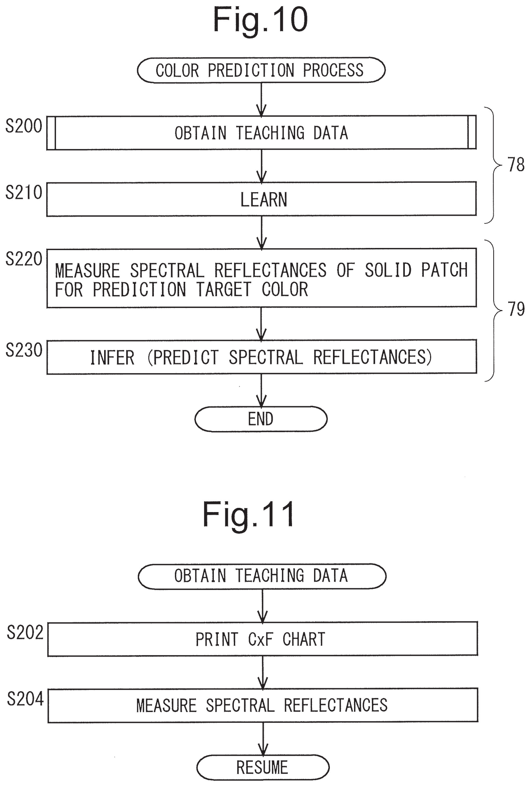

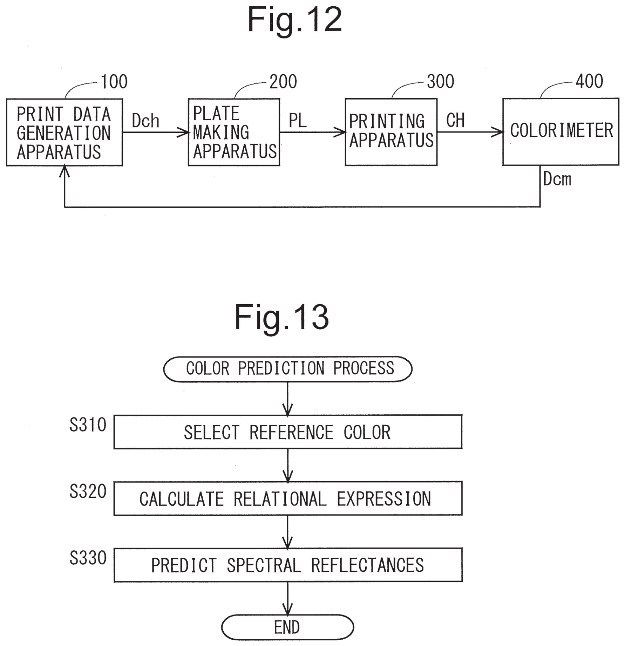

Next, a procedure of the color prediction process by the neural network prediction method will be described with reference to flowcharts illustrated in Figs. 10 and 11. As shown in Fig. 10, first, a process of obtaining teaching data necessary for learning in the neural network 73 to be constructed as a color prediction model is performed (step S200). In step S200, it is preferable to obtain a sufficient number of teaching data pieces so that spectral reflectances are accurately predicted. Specifically, as shown in Fig. 11, step S200 includes a step of printing a CxF chart (step S202) and a step of measuring spectral reflectances (step S204). The processes in step S202 and step S204 will be described in detail with reference to Fig. 12.

In step S202, print data Dch for outputting the CxF chart is firstly created by the print data generation apparatus 100, and the print data Dch is sent to the plate making apparatus 200. The plate making apparatus 200 produces a printing plate PL based on the print data Dch. Then, the printing apparatus 300 performs printing using the printing plate PL. Thus, a CxF chart CH is outputted from the printing apparatus 300.

In step S204, the colorimeter 400 performs colorimetry of the patches included in the CxF chart CH printed in step S202. Colorimetric data Dcm obtained by the colorimetry by the colorimeter 400 is sent to the print data generation apparatus 100. The colorimeter 400 used in this example is a spectral colorimeter. Therefore, the colorimetric data Dcm obtained by the colorimetry is data of spectral reflectances data. In this example, data of spectral reflectances includes a plurality of pieces of data is obtained in 10 nm increments in the wavelength range of 380 nm to 730 nm. Therefore, by the colorimetry of any one of the patches in the CxF chart CH, data of 36 spectral reflectances is obtained.

After obtaining the teaching data, the neural network 73 performs machine learning using the teaching data obtained in step S200 (step S210). As described above, the machine learning is performed using the corresponding neural network 73 for each color prediction target patch. By machine learning in step S210, the parameters (weighting coefficient, bias) of the neural network 73 are optimized. The neural network 73 having the optimized parameters serves as a color prediction model used for color prediction. In this manner, in step S210, a color prediction model for predicting the color of a patch in the CxF chart is constructed.

Note that the processes in step S200 and step S210 (the processes marked with reference numeral 78 in Fig. 10) need only be performed once, and does not need to be performed for each process for one prediction target color. On the other hand, the processes in step S220 and step S230 (the processes marked with reference numeral 79 in Fig. 10) need to be performed for each process for one prediction target color.

In step S220, the spectral reflectances of the solid patch PA2 for the prediction target color are measured using the colorimeter 400. As described above, the spectral reflectances of the solid patch PA2 can be obtained by performing colorimetry on a portion of the corresponding color included in, for example, a colored ball or printed matter. Further, the spectral reflectances of the solid patch PA2 can be substituted with the spectral reflectances of the color sample of the corresponding color.

Next, the spectral reflectances (predicted values) of the color prediction target patch for the prediction target color are obtained by giving, as input data, the spectral reflectances obtained in step S220 to the neural network 73 serving as the color prediction model constructed in step S210 (step S230). In step S230, 36 reflectances are obtained for each of the 11 color prediction target patches. Thus, even if the CxF chart for the prediction target color is not actually printed, the spectral reflectances of all the second type patches 72 assuming that the CxF chart is printed can be obtained.

<0.4.2 Prediction of spectral reflectances of first type patch>

Next, the color prediction process for predicting the spectral reflectances of the first type patches 71 will be described. The spectral reflectances of the medium color patch PA1 and the solid patch PA2 can be easily obtained as described above. Therefore, in this color prediction process, the predicted values of the spectral reflectances of nine halftone patches PA3 among the 11 first type patches 71 are obtained. That is, these nine halftone patches PA3 are used as the color prediction target patches.

<0.4.2.1 General procedure>

Fig. 13 is a flowchart showing a schematic procedure of the color prediction process of predicting spectral reflectances of the first type patches 71. Notably, printing of CxF charts (including a simple CxF chart) for the suitable number of colors (hereinafter referred to as "sample colors") and colorimetry thereof need to be performed before this color prediction process is performed. In other words, the spectral reflectances of each of the first type patches 71 needs to be obtained for each of a plurality of sample colors before the color prediction process is performed. As the sample colors, 32 spot colors are used, for example. Further, with respect to the prediction target color (processing target color), the spectral reflectances in a state where the ink of the prediction target color is solidly applied on the print medium need to be obtained before the color prediction process is performed. In other words, the spectral reflectances of the solid patch PA2 for the prediction target color need to be obtained before the color prediction process is performed. Hereinafter, the flow shown in Fig. 13 will be described.

First, a color close to the prediction target color is selected as a reference color from among a plurality of sample colors based on data of the spectral reflectances obtained before the execution of this color prediction process (step S310). For example, in a case in which 32 spot colors are prepared as sample colors, one of the 32 spot colors close to the prediction target color is selected as a reference color.

Next, a relational expression (approximate expression) representing the relationship between the spectral reflectances of the solid patch PA2 and the spectral reflectances of the color prediction target patch is obtained for the reference color (sample color selected in step S310) (step S320). This relational expression is obtained for each color prediction target patch. In a case where the CxF chart as illustrated in Fig. 1 is used, since there are nine color prediction target patches, nine relational expressions are obtained by the process of step S320.

Finally, the predicted values of the spectral reflectances of the color prediction target patch for the prediction target color are obtained by applying the spectral reflectances of the solid patch PA2 for the prediction target color to the relational expression obtained in step S320 (step S330). In a case where the CxF chart as illustrated in Fig. 1 is used, since there are nine color prediction target patches, the spectral reflectances of the solid patch PA2 for the prediction target color are applied to the nine relational expressions. Thus, the predicted values of the spectral reflectances of each of the nine color prediction target patches are obtained for the prediction target color.

In the above manner, even if the CxF chart is not actually printed using the ink of the prediction target color, the spectral reflectances of all the halftone patches PA3 when the CxF chart is assumed to be printed are obtained. Now, the process of each step in Fig. 13 will be described in detail.

<0.4.2.2 Selection of reference color>

First, the process for selecting a reference color (the process in step S310 in Fig. 13) will be described in detail. In all of the embodiments, data of the spectral reflectances of each patch that forms the CxF chart is composed of 36 reflectances in increments of 10 nm in the wavelength range of 380 nm to 730 nm. Accordingly, regarding the prediction target color and the sample color, data of the spectral reflectances of the solid patch PA2 is composed of 36 reflectances in increments of 10 nm in the wavelength range of 380 nm to 730 nm. Therefore, a square error of the spectral reflectances of the solid patch PA2 between the prediction target color and each sample color is obtained based on the 36 reflectances for the prediction target color and each sample color. Then, a sample color from which the least square error is obtained is selected as a reference color. In this manner, the reference color is selected using the least-squares method.

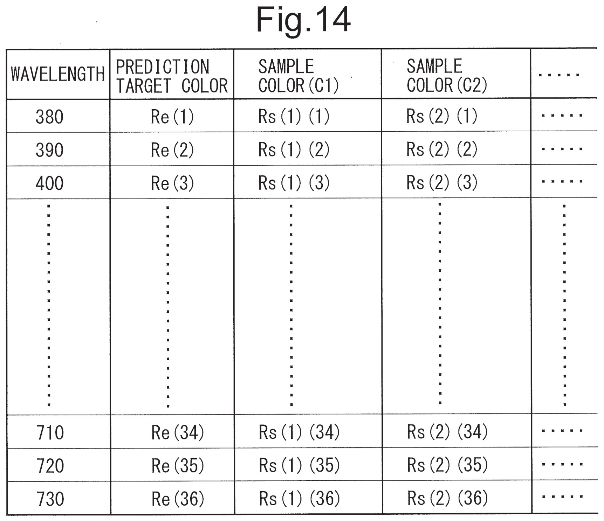

Here, a variable Ci (i is an integer of 1 or more) is used to distinguish a plurality of sample colors from each other, and the spectral reflectances (36 reflectances) of the solid patch PA2 for the sample color Ci are represented as Rs(i) (1) to Rs (i) (36) (see Fig. 14). Further, the spectral reflectances (36 reflectances) of the solid patch PA2 for the prediction target color are represented as Re(1) to Re (36). Then, the square error E(1) between the prediction target color and the first sample color C1 is obtained by the following Equation (4).

$$E(1) = \sum_{j=1}^{36} \left\{ Re(j) - Rs(1)(j) \right\}^2 \quad \cdots (4)$$

Similarly, the square error E(i) between the prediction target color and the ith sample color Ci is obtained by the following Equation (5). Note that a weighting coefficient may be added for each wavelength.

$$E(i) = \sum_{j=1}^{36} \left\{ Re(j) - Rs(i)(j) \right\}^2 \quad \cdots (5)$$

As described above, first, the square error E(i) regarding the spectral reflectances of the solid patch PA2 between the prediction target color and each of the plurality of sample colors Ci prepared in advance is obtained. Then, the sample color corresponding to the least value of the obtained square errors E(i) is selected as a reference color. Thus, the square error between the spectral reflectances of the solid patch PA2 for the prediction target color and the spectral reflectances of the solid patch PA2 for each sample color is obtained, and the sample color from which the least square error is obtained is selected as a reference color.

<0.4.2.3 Calculation of relational expression>

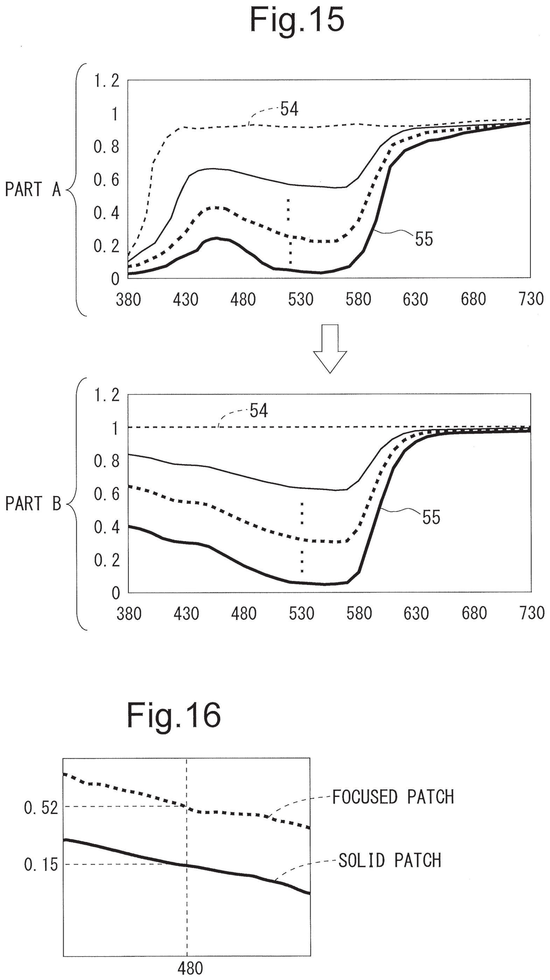

Next, the process for obtaining the relational expression (the process in step S320 in Fig. 13) will be described in detail. Regarding the reference color, the colorimetric values of all the first type patches 71 including the medium color patch PA1 and the solid patch PA2 are obtained. That is, data corresponding to a curve (curve representing spectral reflectances) as schematically shown in part A in Fig. 15 is obtained for all the first type patches 71 (in Fig. 15, the horizontal axis represents wavelength (unit: nm), and the vertical axis represents reflectance). Note that part A in Fig. 15 shows only curves corresponding to four patches in the first type patches 71 (the same applies to part B in Fig. 15). The curve denoted by reference numeral 54 is a curve for the medium color patch PA1, and the curve denoted by reference numeral 55 is a curve for the solid patch PA2. Such data is normalized so that the spectral reflectances of the medium color patch PA1 are 1. As a result, data corresponding to curves (curves representing spectral reflectances) as schematically shown in part B in Fig. 15 is obtained (note that a straight line is obtained for the medium color patch PA1 that is the reference for normalization).

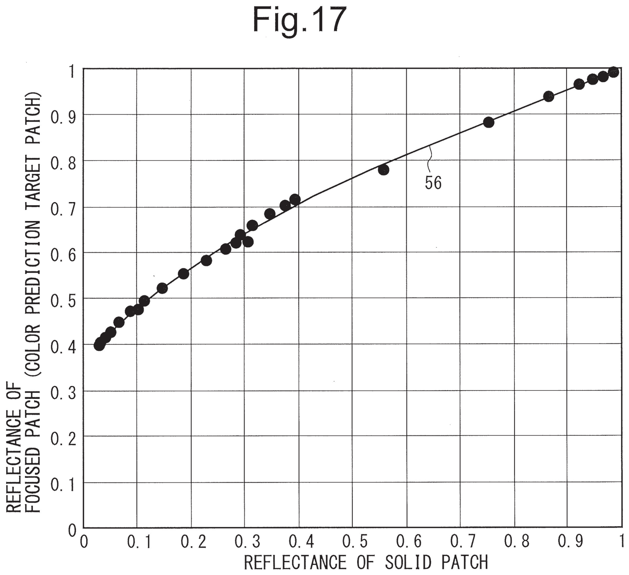

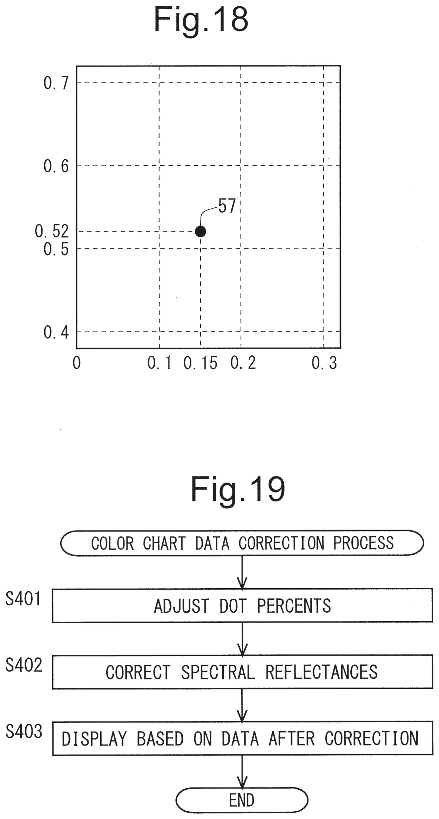

Here, one patch (hereinafter referred to as a "focused patch") out of nine color prediction target patches is focused. Regarding the graph shown in part B in Fig. 15, it is assumed that the curves for the solid patch PA2 and the focused patch around the wavelength of 480 nm are as shown in Fig. 16. In this case, the reflectance of the solid patch PA2 is 0.15, and the reflectance of the focused patch is 0.52. Here, such data obtained by combining the reflectance of the solid patch PA2 and the reflectance of the focused patch is treated as "combination data". Since data of the spectral reflectances is composed of 36 reflectances as described above, 36 pieces of combination data of the reflectances (the reflectances after normalization) of the solid patch PA2 and the reflectances (the reflectances after normalization) of the focused patch are obtained. As shown in Fig. 17, each combination data is represented as one plot on a graph (hereinafter referred to as "relational graph" for convenience) in which the horizontal axis represents the reflectance of the solid patch PA2 and the vertical axis represents the reflectance of the focused patch. For example, the combination data based on the data shown in Fig. 16 is represented as a plot denoted by reference numeral 57 in Fig. 18 on the relational graph. In this manner, 36 plots are shown on the relational graph. The calculation of the relational expression corresponds to obtaining a curve (for example, a curve denoted by reference numeral 56 in Fig. 17) passing through positions as close to the positions of these 36 plots as possible.

In the example shown in part B in Fig. 15, the reflectance assumes a minimum value around the wavelength of 560 nm, and the reflectance assumes the same value at a wavelength larger than 560 nm and a wavelength smaller than 560 nm. Therefore, when the reflectances are sequentially plotted on the relational graph in descending order according to wavelength, for example, the locus is returned. However, as can be understood from Fig. 17, the relationship between the reflectances of the solid patch PA2 and the reflectances of the color prediction target patch is unchanged before and after the locus is returned. From the above, it is considered that the reflectances of the color prediction target patch for the prediction target color can be accurately obtained from the reflectances of the solid patch PA2 for the prediction target color, using the "relationship between the reflectances of the solid patch PA2 and the reflectances of the color prediction target patch" for the reference color.

In view of the above, in step S320 in Fig. 13, a relational expression (approximate expression for obtaining an approximate value of the spectral reflectances of the focused patch from the spectral reflectances of the solid patch PA2) representing the relationship between the spectral reflectances of the solid patch PA2 and the spectral reflectances of the focused patch is obtained based on the 36 pieces of combination data described above. The relational expression is obtained by a known method. For example, the relational expression can be obtained by solving simultaneous equations obtained from the 36 pieces of combination data by Gaussian elimination or Gauss-Jordan elimination. In this way, relational expressions respectively corresponding to the nine color prediction target patches are obtained.

Meanwhile, as the approximate expression, for example, a quintic expression is adopted. As an example, a quintic expression such as the following Expression (6) is obtained by the process in step S320 in Fig. 13. In the following Expression (6), y represents the reflectance of the color prediction target patch, and x represents the reflectance of the solid patch PA2.

$$y = -0.321x + 0.7136x^4 - 0.1681x^3 - 0.6897x^2 + 1.0892x + 0.375 \quad \cdots (6)$$

In step S320, for the reference color selected in step S310, an approximate expression (for example, a quintic expression) corresponding to each of the nine halftone patches PA3 is obtained as a relational expression for use in step S330 in the manner described above.

<0.4.2.4 Calculation of spectral reflectances>

Next, the process for obtaining the predicted values of the spectral reflectances (the process in step S330 in Fig. 13) will be described in detail. At the start of the process in step S330, a quintic expression such as the above Expression (6) is obtained as a relational expression for each color prediction target patch for the reference color. Further, as described above, data of the spectral reflectances is composed of 36 reflectances. Therefore, in step S330, the 36 reflectances constituting data of spectral reflectances of the solid patch PA2 for the prediction target color are substituted one by one into the corresponding relational expression (relational expression representing the relationship between the spectral reflectances of the solid patch PA2 and the spectral reflectances of the corresponding color prediction target patch) for each of the color prediction target patches, whereby 36 reflectances constituting data of the spectral reflectances of the corresponding color prediction target patch for the prediction target color are obtained.

As described above, when the relational expression is calculated, normalization is performed so that the spectral reflectances of the medium color patch PA1 are 1. Therefore, the 36 reflectances obtained from the relational expression are subjected to denormalization (process for returning the normalized data to the data that has not been normalized) based on the actual spectral reflectances of the medium color patch PA1.

<0.5 Color chart data correction process>

The detailed contents of the color chart data correction process for correcting information on the spectral reflectances of the halftone patches PA3 in the color chart data 50 are different for each embodiment. Therefore, hereinafter, details of the color chart data correction process will be described for each embodiment.

As described above, when the color chart data correction process is performed, the color chart data 50 is held in the RAM 13 (see Fig. 4). In the following description, unless otherwise specified, processing on the color chart data 50 held in the RAM 13 will be described.

Further, upon execution of the color chart data correction process, information on the spectral reflectances of the halftone patches PA3 in the color chart data 50 is corrected, and thus the color adjustment is performed as a result. Therefore, hereinafter, the operation related to the correction of the color chart data 50 may be referred to as "color adjustment".

<1. First Embodiment>

<1.1 Color chart data correction process>

Fig. 19 is a flowchart showing a procedure of a color chart data correction process according to a first embodiment. Note that it is assumed that selection of a color to be processed (specification of a prediction target color) is performed in the print data generation apparatus 100 before the color chart data correction process is started (the same applies to other embodiments).

After the color chart data correction process is started, first, the dot percents of the nine halftone patches PA3 are adjusted by the operation of the operator (step S401). At this time, first, a dialog including a graph as illustrated in Fig. 20, for example, is displayed on the display unit 16 of the print data generation apparatus 100. The operator is able to adjust the dot percents using this graph. Regarding Fig. 20, the input dot percent is the dot percent before adjustment, and the output dot percent is the dot percent after adjustment. By default, the graph displays a line 58 representing the "correspondence relationship between the input dot percents and the output dot percents" in a state where the adjustment operation is not performed, and nine black circles corresponding to the nine halftone patches PA3. Regarding the line 58, a position where both the dot percent ratio and the output dot percent are 0% is a start point, and a position where both the input dot percent and the output dot percent are 100% is an end point.

In a state where the graph as described above is displayed, the operator performs a drag operation, as illustrated in Fig. 21, for example, from a position indicated by an arrow denoted by reference numeral 59 to a position indicated by an arrow denoted by reference numeral 60 with respect to a black circle corresponding to a certain halftone patch PA3. Note that, in this example, only a drag operation in the vertical direction with respect to each black circle is possible. If the position indicated by the arrow denoted by reference numeral 60 is the position at which "input dot percent = 20%" and "output dot percent = 30%", "input dot percent = 20%" is associated with "output dot percent = 30%" with respect to the corresponding halftone patch PA3.

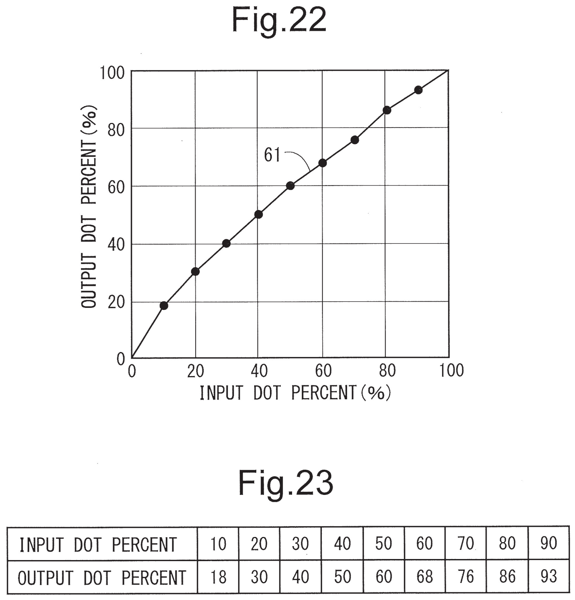

In the above manner, the input dot percents and the output dot percents are associated with respect to all the halftone patches PA3 based on the drag operation by the operator. As a result, for example, as illustrated in Fig. 22, a line 61 representing the "correspondence relationship between the input dot percents and the output dot percents" after adjustment operation and nine black circles corresponding to the nine halftone patches PA3 after adjustment operation are displayed on the graph. Then, as a result of the adjustment operation, a conversion table (a table in which the input dot percents and the output dot percents are associated with each other for each halftone patch PA3) as schematically illustrated in Fig. 23 is generated.

After the dot percents are adjusted, the information on the spectral reflectances of the nine halftone patches PA3 in the color chart data 50 is corrected by the internal processing of the print data generation apparatus 100 (that is, by the computer) (step S402). The spectral reflectances after correction of each halftone patch PA3 are obtained using the color chart data 50 before correction and the conversion table. For example, in the conversion table illustrated in Fig. 23, "input dot percent = 50%" and "output dot percent = 60%" are associated with each other. In this case, the spectral reflectances corresponding to "dot percent = 60%" in the color chart data 50 before correction are adopted as the spectral reflectances corresponding to "dot percent = 50%" in the color chart data 50 after correction. In the conversion table illustrated in Fig. 23, "input dot percent = 70%" and "output dot percent = 76%" are associated with each other. In this case, the spectral reflectances corresponding to "dot percent = 76%" are obtained by linear interpolation or the like from the spectral reflectances corresponding to "dot percent = 70%" in the color chart data 50 before correction and the spectral reflectances corresponding to "halftone area ratio = 80%" in the color chart data 50 before correction, and the obtained spectral reflectances are adopted as the spectral reflectances corresponding to "dot percent = 70%" in the color chart data 50 after correction.

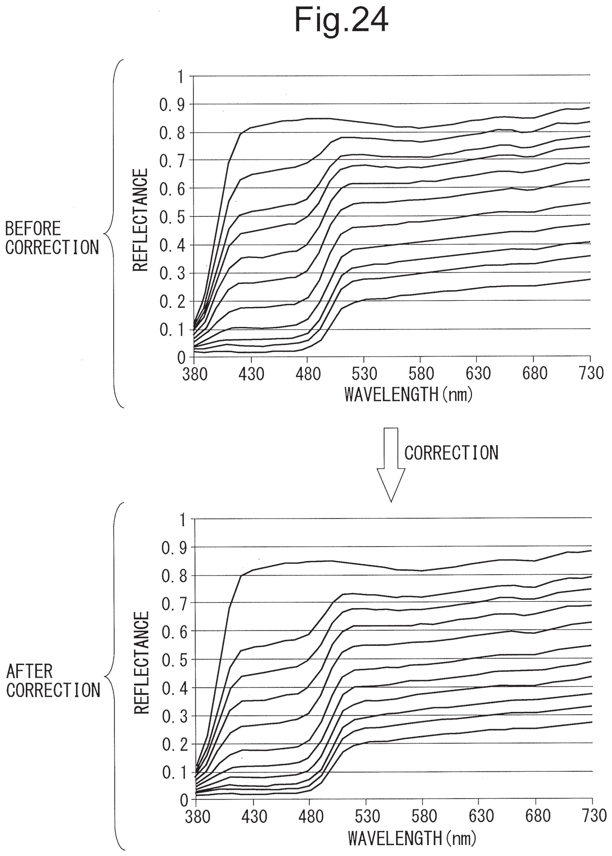

As described above, in step S402, the information on the spectral reflectances of each halftone patch PA3 in the color chart data 50 is corrected so that, regarding each halftone patch PA3, the spectral reflectances corresponding to the output dot percent (dot percent after adjustment) are associated with the input dot percent (dot percent before adjustment). As a result, the "curve representing the relationship between the wavelength and the reflectance (curve representing the spectral reflectances)" of each patch is corrected, as illustrated in Fig. 24, for example.

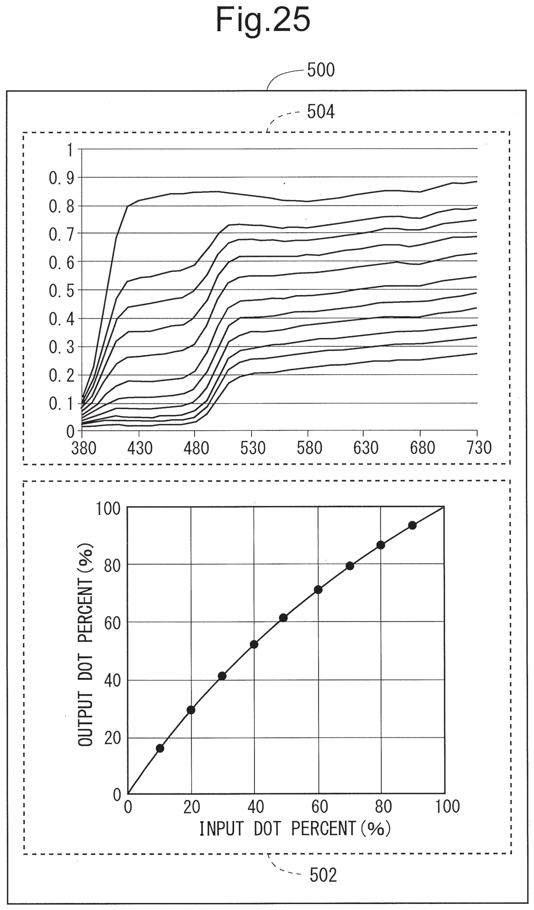

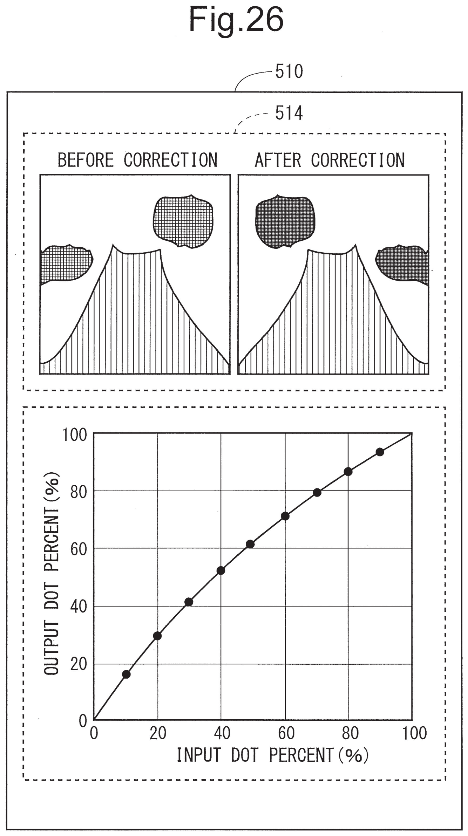

After information on the spectral reflectances is corrected, the print data generation apparatus 100 performs display based on the color chart data 50 after correction (step S403). In this regard, for example, a dialog 500 as illustrated in Fig. 25 including a graph 502 for the operator to adjust the dot percents and a graph 504 showing curves representing the spectral reflectances of respective patches based on the color chart data 50 after correction is displayed on the display unit 16 of the print data generation apparatus 100. Specifically, the dialog 500 as illustrated in Fig. 25 is displayed when the adjustment of the dot percents by the operator is started, and the display contents in the graph 502 and the graph 504 are changed by the adjustment of the dot percents. Furthermore, for example, as illustrated in Fig. 26, a dialog 510 displayed on the display unit 16 may include a comparison display part 514 that symmetrically displays a preview image based on the color chart data 50 before correction (that is, the image before the spectral reflectances of the halftone patches PA3 are corrected) and a preview image based on the color chart data 50 after correction (that is, the image after the spectral reflectances of the halftone patches PA3 are corrected). In this case, the operator previously selects image data (however, the image data uses a spot color for which the color chart data 50 is corrected) for displaying preview images before and after correction. By displaying the dialog including the comparison display part 514 as described above, the operator is able to perform the adjustment operation while confirming the change in the image (change in color in the image) due to the correction of the spectral reflectances on the screen.

Then, the color chart data correction process ends. Thereafter, the process returns to step S20 in Fig. 5, and when it is determined that the correction is necessary in step S30 in Fig. 5, the color chart data correction process is performed again. That is, the color chart data correction process is repeated until a desired color is obtained.

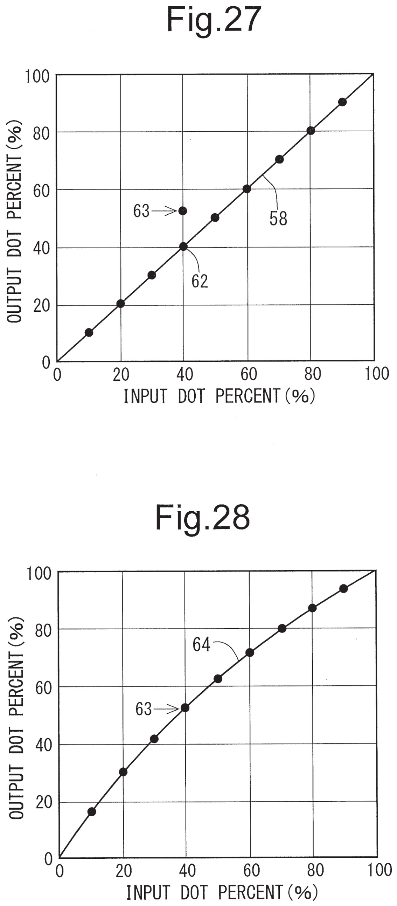

In the above description, the example in which the operator performs the drag operation on the black circles (see Fig. 20) corresponding to the respective halftone patches PA3 has been described, but the present invention is not limited thereto. The configuration may be such that the output dot percents corresponding to all the halftone patches PA3 are automatically obtained, when the operator performs the drag operation on the black circle corresponding to any one of the halftone patches PA3. This is realized as follows. For example, it is assumed that the drag operation to a position indicated by an arrow denoted by reference numeral 63 is performed on a black circle denoted by reference numeral 62 in Fig. 27. At this time, an expression of a curve connecting a start point of the line 58, the position indicated by an arrow denoted by reference numeral 63, and an end point of the line 58 (a curve denoted by reference numeral 64 in Fig. 28) is obtained based on a predetermined calculation expression. By substituting the input dot percent corresponding to each halftone patch PA3 into the expression, the output dot percent corresponding to each halftone patch PA3 is obtained. By adopting such a method, it is possible for the operator to correct information on the spectral reflectances constituting the color chart data 50 with an extremely simple operation.

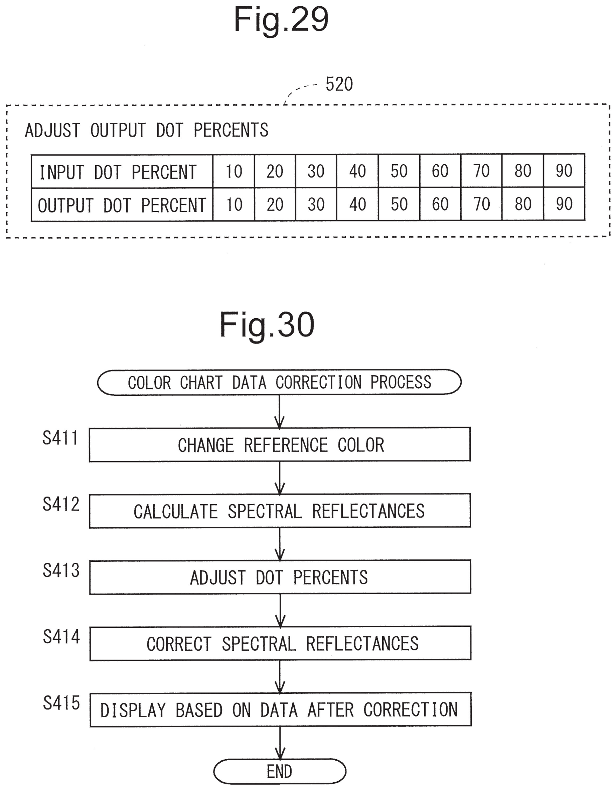

In addition, association between the input dot percents and the output dot percents by the operator may be made using a tabular form input screen. In this regard, for example, the configuration may be such that a dialog including an input part 520 as illustrated in Fig. 29 is displayed on the display unit 16 of the print data generation apparatus 100, and an input of the output dot percents (dot percents after adjustment) by the operator is accepted.

Note that, in the present embodiment, a dot percents adjustment step is realized by the above step S401, a spectral characteristics correction step is realized by the above step S402, and an image comparison screen display step is realized by the above step S403 (however, a case of displaying the dialog 510 illustrated in Fig. 26).

<1.2 Storage of color chart data as file>

In the meantime, at the end of the above step S402, information on the spectral reflectances in the color chart data 50 stored in the RAM 13 is corrected, but information on the spectral reflectances in the color chart data file 142 stored in the auxiliary storage device 14 is not corrected. Therefore, information on the spectral reflectances in the color chart data file 142 may be updated based on information on the spectral reflectances in the color chart data 50 after correction stored in the RAM 13 at an appropriate timing after the above step S402. By holding the color chart data 50 after correction in the form of a file in this manner, the corrected data can be shared among a plurality of systems.

<1.3 Effect>

According to the present embodiment, when the dot percents are adjusted by the operator, the information on the spectral reflectances of each halftone patch PA3 in the color chart data (data holding the information on the dot percents and the spectral reflectances of respective patches of the CxF chart) 50 is corrected by internal processing of the print data generation apparatus 100, so that the spectral reflectances corresponding to the dot percents after adjustment are associated with the dot percents before adjustment. In this regard, the adjustment of the dot percents can be performed intuitively, unlike the adjustment of the spectral reflectances. Thus, according to the present embodiment, the operator is able to easily correct information on the spectral reflectances of each patch included in the CxF chart.

<2. Second Embodiment>

<2.1 Color chart data correction process>

Fig. 30 is a flowchart showing a procedure of a color chart data correction process according to a second embodiment. In the first embodiment, adjustment of the dot percents, that is, adjustment of tone, is performed in order to correct information on the spectral reflectances in the color chart data 50. However, in order to obtain a desired color, there is a case in which hue adjustment may also be required, in addition to tone adjustment. Therefore, in the present embodiment, it is possible to change the reference color selected (selected in step S310 in Fig. 13) in the color prediction process of predicting the spectral reflectances of the first type patches 71.

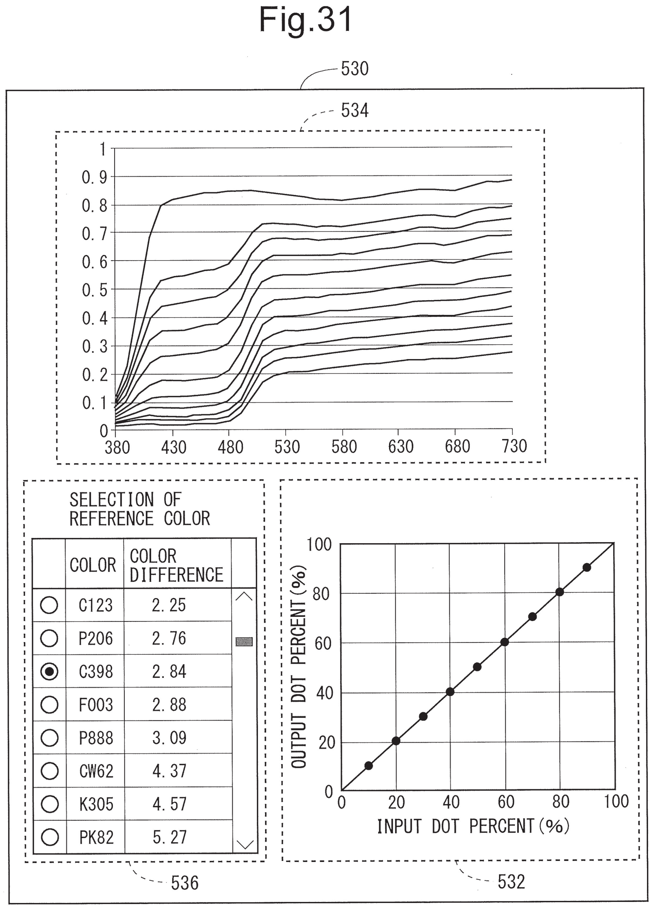

After the color chart data correction process is started, first, a process of selecting a reference color (reference color after change) by the operator is performed (step S411). At this time, first, for example, a dialog 530 as illustrated in Fig. 31 is displayed on the display unit 16 of the print data generation apparatus 100. The dialog 530 includes a graph 532 for the operator to adjust the dot percents, a graph 534 showing curves representing the spectral reflectances of respective patches, and a region 536 for the operator to select (change) the reference color. The operator selects a sample color to be used for calculating the spectral reflectances (predicted values) of the halftone patches PA3 for the prediction target color (color to be currently processed) from among a plurality of sample colors displayed in the region 536.

When the reference color is changed, the spectral reflectances of each halftone patch PA3 is recalculated based on the reference color after change (step S412). In this regard, first, as in step S320 in Fig. 13, a relational expression representing the relationship between the spectral reflectances of the solid patch PA2 and the spectral reflectances of the color prediction target patch (each of the nine halftone patches PA3) is obtained for the reference color after change. Thereafter, as in step S330 in Fig. 13, the spectral reflectances (predicted values) of each halftone patch PA3 are obtained by applying the spectral reflectances of the solid patch PA2 to the above relational expression. In a case in which the relational expression is obtained in advance for all the sample colors selectable in step S411, it is not necessary to obtain the relational expression for the reference color after change in step S412.

After the spectral reflectances are recalculated, adjustment of the dot percents (step S413), correction of the spectral reflectances (step S414), and display based on the color chart data 50 after correction (step S415) are performed in the same manner as in the first embodiment (see Fig. 19). Note that, in step S414, information on the spectral reflectances of each halftone patch PA3 in the color chart data 50 is corrected based on the spectral reflectances after recalculation in the above step S412.

Then, the color chart data correction process ends. Thereafter, the process returns to step S20 in Fig. 5, and when it is determined that the correction is necessary in step S30 in Fig. 5, the color chart data correction process is performed again. However, in the second and subsequent processes, the processes of steps S411 and S412 may be omitted. If the reference color is changed, the adjustment result of the dot percents so far is ignored, and the operator needs to adjust the dot percents again from the beginning based on the reference color after change.

Also in the present embodiment, information on the spectral reflectances in the color chart data file 142 may be updated based on information on the spectral reflectances in the color chart data 50 after correction stored in the RAM 13 at an appropriate timing after the above step S414. Furthermore, also in the present embodiment, by displaying the dialog including the comparison display part 514 (see Fig. 26) as described above in the above step S415, the operator is able to perform the adjustment operation while confirming the change in the image (change in color in the image) due to the correction of the spectral reflectances on the screen.

In the present embodiment, a reference color changing step is realized by the above step S411, a spectral characteristics calculation step is realized by the above step S412, a dot percents adjustment step is realized by the above step S413, a spectral characteristics correction step is realized by the above step S414, and an image comparison screen display step is realized by the above step S415.

In the meantime, regarding the selection (change) of the reference color, not only a color for which a colorimetric result is actually obtained but also a color for which a dot gain is artificially generated may be selected. For example, the configuration may be such that a relational expression representing the relationship between the spectral reflectances of the solid patch PA2 and the spectral reflectances of each halftone patch PA3 is generated based on a result (reflectance values) obtained by substituting an appropriate value into the expression of the Yule-Nielsen model shown in the following Expression (7) (substituting a value such as "1.5" or "1.7" into n), and the relational expression is named so as to be selectable in the above step S411. Note that, regarding the following Expression (7), a represents dot percentage, $R_{\lambda 100\%}$ represents reflectance in a state in which the target ink is solidly applied, and $R_{\lambda \text{paper}}$ represents reflectance of a print medium (for example, printing paper).

$$R(\lambda) = \left[ a \times R_{\lambda 100\%}^{1/n} + (1-a) \times R_{\lambda \text{paper}}^{1/n} \right]^n \quad \cdots (7)$$

In the above Expression (7), n is a value that varies depending on the characteristics of the print medium (for example, printing paper). That is, by generating the relational expressions using various values of n, various colors (virtual colors) having different degrees of dot gain may be selected as a reference color.

<2.2 Effects>

According to the present embodiment, the relationship between the spectral reflectances of the solid patch PA2 and the spectral reflectances of each halftone patch PA3 for the reference color after change is applied to the prediction of the spectral reflectances of each halftone patch PA3 for the prediction target color. Therefore, it is possible to adjust the degree of the dot gain, in other words, to adjust the hue, with respect to the initial prediction result (the predicted values of the spectral reflectances of the halftone patch PA3). Furthermore, after the change of the reference color, adjustment of the dot percents, that is, adjustment of the tone is also performed. In this way, the operator is able to adjust the color while using both the hue adjustment and the tone adjustment. Thus, according to the present embodiment, the operator is able to correct information on the spectral reflectances of each patch included in the CxF chart so as to obtain a color closer to the target.

<3. Third Embodiment>

<3.1 Overview>

In the first embodiment, the dot percents are adjusted by the operator in order to correct information on the spectral reflectances in the color chart data 50, and in the second embodiment, it is possible to change the reference color before adjustment of the dot percents. Here, it is conceivable to change the reference color after adjusting the dot percents, because of a reason such that a color close to the target may not be obtained. However, when the reference color is changed, the dot gain also changes, and thus the adjustment of the dot percents until then is meaningless. Therefore, when the reference color is changed, it is necessary to adjust the dot percents again from the beginning. Thus, in the present embodiment, as described below, a configuration in which an operator adjusts a spot color tone value (SCTV) specified by ISO 20654 is adopted.

The SCTV is defined (specified) by ISO 20654. Since a specific definition of the SCTV in ISO 20654 is known, description of its definition is omitted.

The SCTV is calculated using tristimulus values X, Y, and Z of the solid patch PA2, the medium color patch PA1, and the halftone patch PA3. The tristimulus values X, Y, and Z are determined by a known method based on spectral distribution of a light source, spectral reflectances, and color matching functions respectively associated with the tristimulus values X, Y, and Z. More specifically, the tristimulus values X, Y, and Z are calculated by the following Expression (8). Regarding Expression (8), Km represents the maximum luminous efficiency, $\Sigma$ represents the sum of values for $\lambda$ (wavelength) every 10 nm (for example, values every 10 nm in the wavelength range of 380 to 730 nm), S($\lambda$) represents the spectral distribution of a light source, R($\lambda$) represents the spectral reflectance, and x($\lambda$), y($\lambda$), and z($\lambda$) are color matching functions associated with the tristimulus values X, Y, and Z, respectively.

$$\left. \begin{array}{l} X = Km \sum S(\lambda) \cdot R(\lambda) \cdot x(\lambda) \\ Y = Km \sum S(\lambda) \cdot R(\lambda) \cdot y(\lambda) \\ Z = Km \sum S(\lambda) \cdot R(\lambda) \cdot z(\lambda) \end{array} \right\} \cdots (8)$$

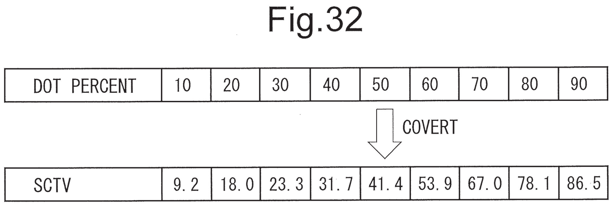

As can be grasped from the definition of the SCTV and the above Expression (8), the SCTV may be obtained from the spectral reflectances. Further, regarding the color chart data 50, the dot percent and the spectral reflectances are associated for each patch (see Fig. 3). From the above, the SCTV may be obtained from the dot percent of each halftone patch PA3. For example, as illustrated in Fig. 32, dot percents of nine halftone patches PA3 may be converted into the SCTVs. The SCTV may also be obtained from dot percents of various values by linear interpolation or the like. Thus, conversely, the dot percent may be obtained from the SCTV.

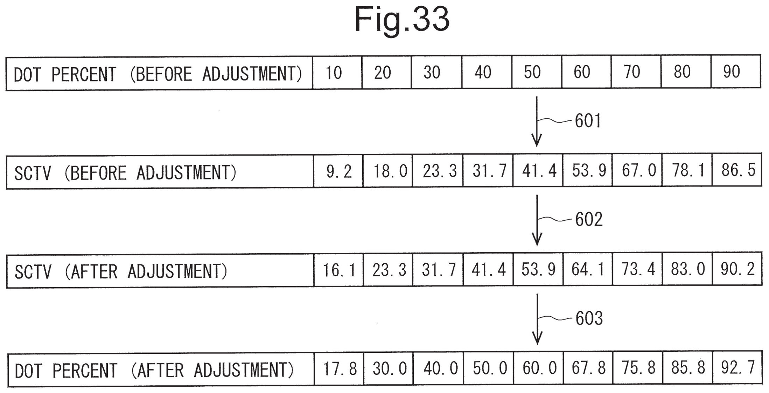

In view of the above, it is possible to adjust the dot percents as illustrated in Fig. 33 based on the adjustment of the SCTVs by the operator. Regarding Fig. 33, first, the dot percent of each halftone patch PA3 may be converted into the SCTV as indicated by an arrow denoted by reference numeral 601. Thereafter, as indicated by an arrow denoted by reference numeral 602, the SCTVs may be adjusted by the operator. Then, as indicated by an arrow denoted by reference numeral 603, the SCTVs after adjustment may be converted into dot percents.

In the meantime, as understood from the definition of the SCTV, the SCTV is a value in which a visual effect is taken into consideration. Therefore, even if the reference color is changed after the adjustment of the SCTVs, the SCTVs may be readjusted based on the SCTVs after adjustment.

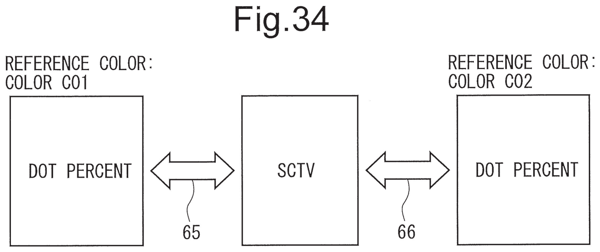

Here, an example in which the reference color is changed from a color C01 to a color C02 is considered. Note that, it is assumed that the spectral reflectances of the halftone patches PA3 for the prediction target color have already been predicted taking the color C01 as the reference color (the color chart data 50 for the prediction target color has already been generated). Regarding the case where the reference color is the color C01, since there is the color chart data 50 in which the dot percent and the spectral reflectances are associated for each patch, it is possible to mutually convert the dot percents and the SCTVs as indicated by an arrow denoted by reference numeral 65 in Fig. 34. In the case where the reference color is the color C02, there is no color chart data 50. However, data in which the dot percent and the spectral reflectances are associated for each patch may be generated using the above-described relational expression (relational expression representing relationship between spectral reflectances of the solid patch PA2 and spectral reflectances of each halftone patch PA3) for the color C02. Therefore, even in the case where the reference color is the color C02, it is possible to mutually convert the dot percents and the SCTVs, based on the above data, as indicated by an arrow denoted by reference numeral 66 in Fig. 34.

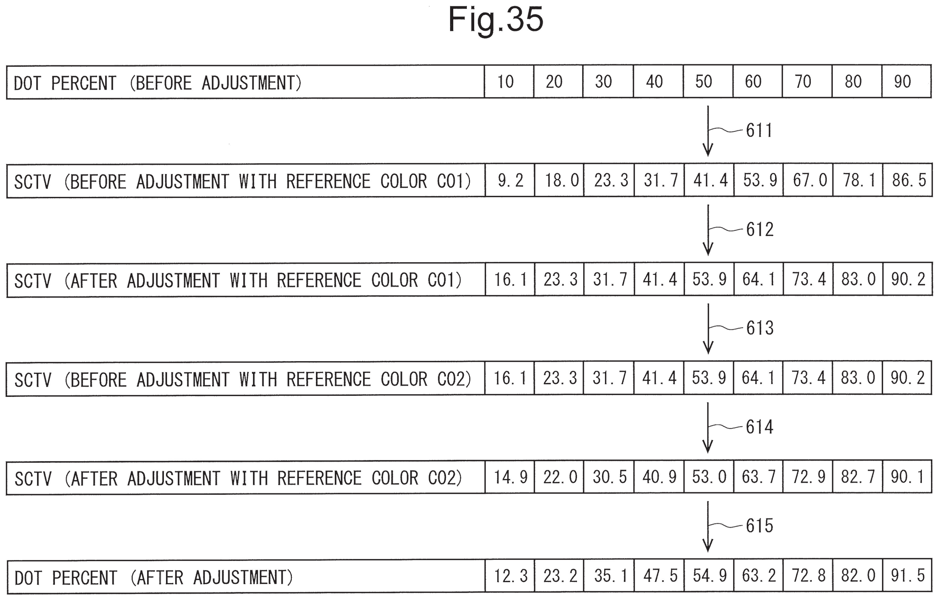

From the above, it is possible to adjust the dot percents as illustrated in Fig. 35 based on the adjustment of the SCTVs and the change of the reference color by the operator. Regarding Fig. 35, first, the dot percent of each halftone patch PA3 can be converted into the SCTV as indicated by an arrow denoted by reference numeral 611. Thereafter, as indicated by an arrow denoted by reference numeral 612, the SCTVs can be adjusted by the operator. Here, it is assumed that the operator has changed the reference color from the color C01 to the color C02. At this time, since the SCTV is the value in which a visual effect is considered as described above, the SCTVs are maintained before and after the change of the reference color as indicated by an arrow denoted by reference numeral 613. In this state, the operator is able to adjust the SCTVs again as indicated by an arrow denoted by reference numeral 614. Then, as indicated by an arrow denoted by reference numeral 615, the SCTVs after adjustment in a state where the reference color is the color C02 can be converted into dot percents.

Based on the above, the procedure of the color chart data correction process in the present embodiment will be described below.

<3.2 Color chart data correction process>

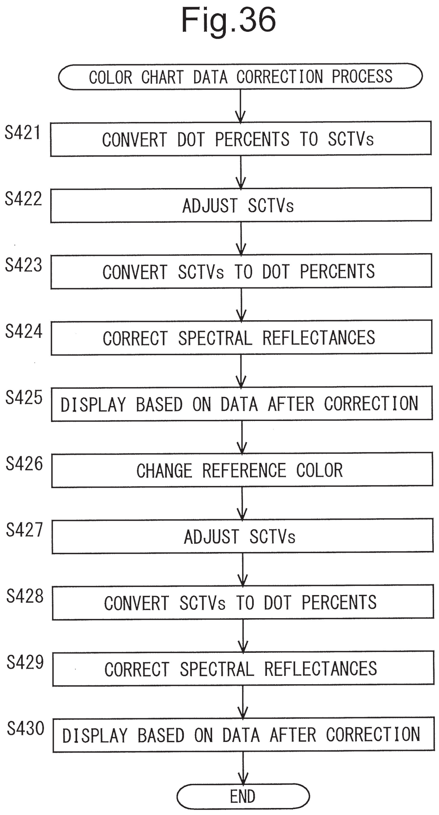

Fig. 36 is a flowchart showing the procedure of the color chart data correction process according to the present embodiment. After the color chart data correction process is started, first, regarding data of each of the nine halftone patches PA3 in the color chart data 50 of the prediction target color, the dot percent is converted to the SCTV as indicated by an arrow denoted by reference numeral 611 in Fig. 35 (step S421).

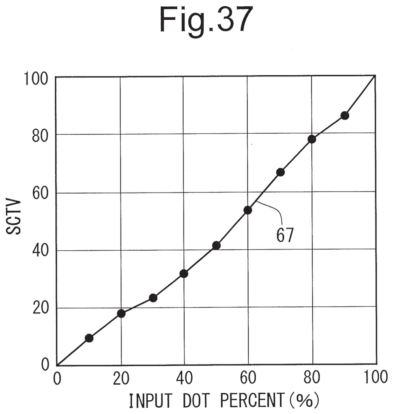

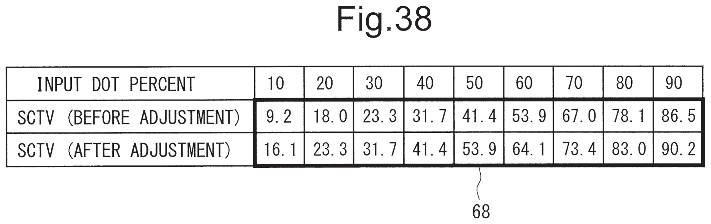

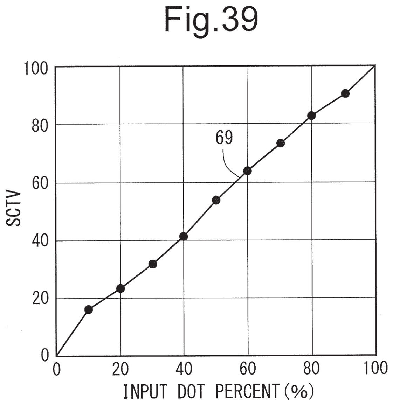

Thereafter, the operator adjusts the SCTVs (step S422). At this time, for example, a dialog including a graph as illustrated in Fig. 37 is displayed on the display unit 16 of the print data generation apparatus 100. The operator is able to adjust the SCTVs by using this graph. By default, the graph displays a line 67 representing the "correspondence relationship between the input dot percents and the SCTVs" in a state where the adjustment operation is not performed, and nine black circles corresponding to the nine halftone patches PA3. In a state where the graph as described above is displayed, the operator adjusts the SCTVs by performing the drag operation on the black circle corresponding to each halftone patch PA3 in the same manner as in the first embodiment. For example, the SCTVs are adjusted as illustrated in a thick frame denoted by reference numeral 68 in Fig. 38. As a result, for example, as illustrated in Fig. 39, a line 69 representing the "correspondence relationship between the input dot percents and the SCTVs" after adjustment operation and nine black circles corresponding to the nine halftone patches PA3 after adjustment operation are displayed on the graph. Note that the operator may adjust the SCTVs using a tabular form input screen.

After the operator adjusts the SCTVs, regarding the data of each of the nine halftone patches PA3, the SCTV after adjustment is converted to the dot percent (step S423). Thereafter, based on the dot percents and the dot percents obtained in step S423, similarly to step S402 (see Fig. 19) in the first embodiment, information on the spectral reflectances of the nine halftone patches PA3 in the color chart data 50 is corrected (step S424). Then, as in step S403 in the first embodiment, display based on the color chart data 50 after correction is performed (step S425). If it is not necessary to change the reference color, the processes of step S426 and subsequent steps can be omitted.

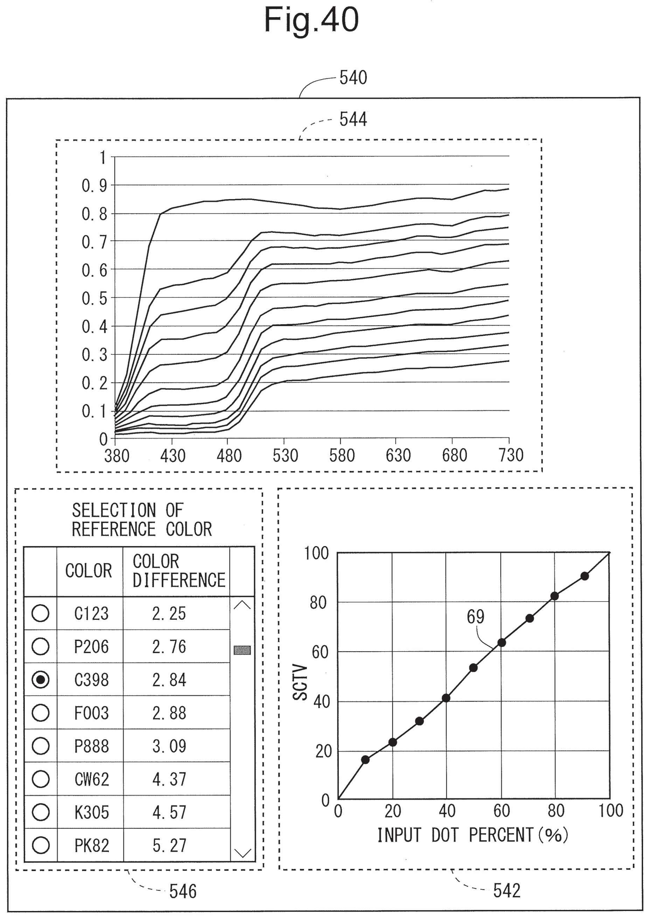

After step S425 ends, the reference color is changed by the operator (step S426). The reference color is changed, for example, in a state where a dialog 540 as illustrated in Fig. 40 is displayed on the display unit 16 of the print data generation apparatus 100. The dialog 540 includes a graph 542 for the operator to adjust the SCTVs, a graph 544 showing curves representing the spectral reflectances of respective patches, and a region 546 for the operator to select (change) the reference color. The operator selects a sample color to be used for calculating the spectral reflectances (predicted values) of the halftone patches PA3 for the prediction target color (color to be currently processed) from among a plurality of sample colors displayed in the region 546.

Next, the operator adjusts the SCTVs (step S427). At this time, the adjustment is resumed from the values at the end of step S422 (see a portion indicated by the arrow denoted by reference numeral 613 in Fig. 35). The specific operation related to the adjustment of the SCTVs is similar to that in step S422.

After the operator adjusts the SCTVs, regarding the data of each of the nine halftone patches PA3, the SCTV after adjustment in step S427 is converted to the dot percents (step S428). In step S428, first, data in which the dot percent and the spectral reflectances are associated for each patch for the prediction target color is generated using the above-described relational expression (relational expression representing relationship between spectral reflectances of the solid patch PA2 and spectral reflectances of each halftone patch PA3) for the reference color after change. Then, the SCTV corresponding to each of the nine halftone patches PA3 is obtained based on the definition of the SCTV and the above Expression (8). That is, the SCTV corresponding to the dot percent of each halftone patch PA3 is obtained. Furthermore, a dot percents-SCTVs conversion table for converting dot percents of various values into the SCTVs by linear interpolation or the like is generated, and an SCTVs-dot percents conversion table for conversely converting the SCTVs into dot percents is also generated based on the halftone area ratio-SCTV conversion table. As a result, the SCTVs after adjustment in step S427 are converted into the dot percents (dot percents after adjustment).

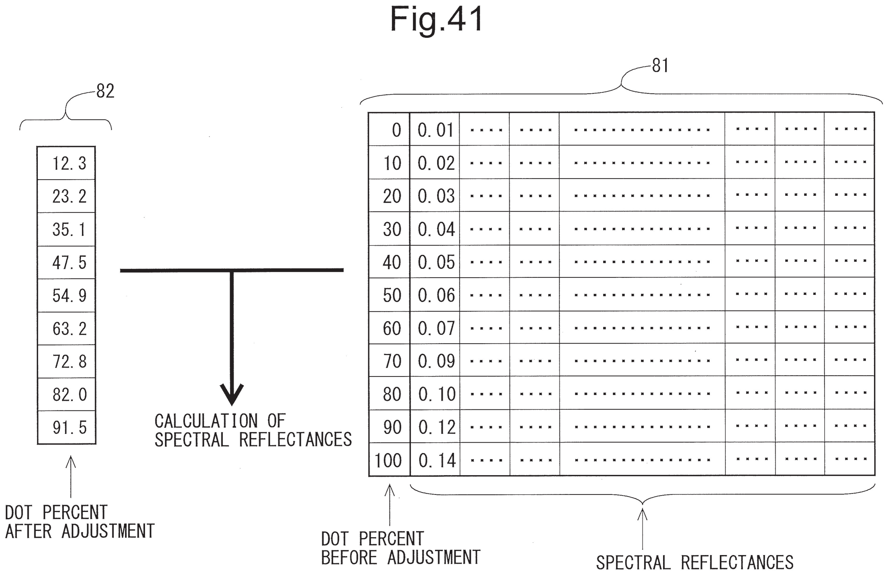

Thereafter, information on the spectral reflectances corresponding to the nine halftone patches PA3 in the color chart data 50 is corrected (step S429). In this regard, in step S428, data in which the dot percents and the spectral reflectances are associated for each patch for the prediction target color (data as schematically shown in a portion denoted by reference numeral 81 in Fig. 41) is generated. Further, in step S429, the dot percents after adjustment (see a portion denoted by reference numeral 82 in Fig. 41) are obtained. In view of the above, the spectral reflectances corresponding to the dot percents after adjustment can be obtained by linear interpolation or the like (see Fig. 41). The spectral reflectances thus obtained are adopted as the spectral reflectances in the color chart data 50 after correction.

Finally, as in step S403 in the first embodiment, display based on the color chart data 50 after correction is performed (step S430).

Also in the present embodiment, information on the spectral reflectances in the color chart data file 142 may be updated based on information on the spectral reflectances in the color chart data 50 after correction stored in the RAM 13 at an appropriate timing after the above step S424 or after the above step S429. Furthermore, also in the present embodiment, by displaying the dialog including the comparison display part 514 (see Fig. 26) as described above in the above steps S425 and S430, the operator is able to perform the adjustment operation while confirming the change in the image (change in color in the image) due to the correction of the spectral reflectances on the screen.

Note that, in the present embodiment, a dot percents-SCTVs conversion step is realized by the above step S421, an SCTVs adjustment step is realized by the above steps S422 and S427, an SCTVs-dot percents conversion step is realized by the above steps S423 and S428, the spectral characteristics correction step is realized by the above steps S424 and S429, the image comparison screen display step is realized by the above steps S425 and S430, and the reference color changing step is realized by the above step S426. In addition, the color adjustment step of first time is realized by the above steps S422, S423, and S424, and the color adjustment step of second time is realized by the above steps S427, S428, and S429.

<3.3 Effects>

According to the present embodiment, the operator adjusts the SCTVs specified by ISO 20654. Then, the SCTVs after adjustment are converted into the dot percents, and the information on the spectral reflectances of each halftone patch PA3 in the color chart data (data holding the information on the dot percent and the spectral reflectances of each patch of the CxF chart) 50 is corrected by internal processing of the print data generation apparatus 100 so that the spectral reflectances corresponding to the dot percents after conversion are associated with the dot percents before adjustment. Meanwhile, the adjustment of the SCTVs can be performed intuitively, unlike the adjustment of the spectral reflectances. That is, the operator is able to easily perform the adjustment operation for correcting information on the spectral reflectances. Further, when the reference color is changed after the adjustment of the SCTVs, the SCTVs may be readjusted based on the SCTVs after adjustment. Therefore, waste of adjustment operation is suppressed. From the above, according to the present embodiment, the operator is able to easily and efficiently correct information on the spectral reflectances of each patch included in the CxF chart.

<4. Modifications>

Hereinafter, modifications will be described.

<4.1 First Modification>

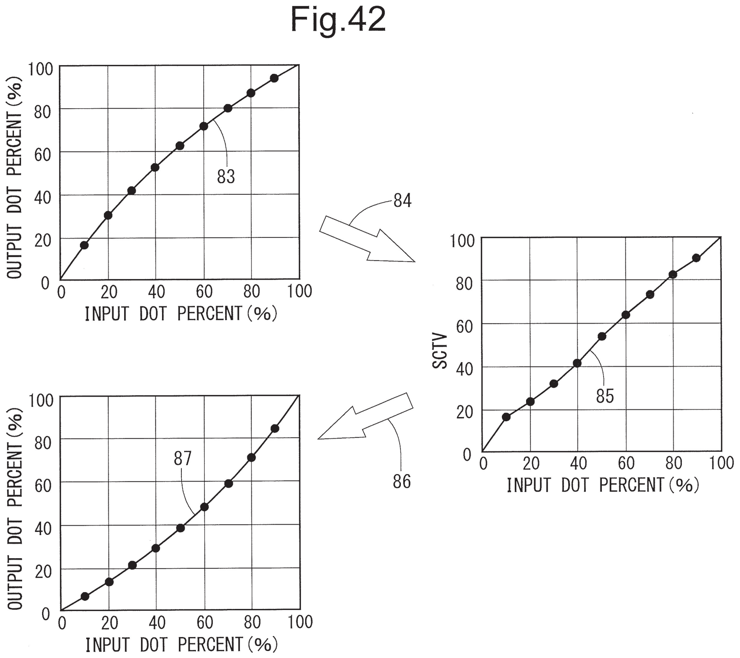

In the present modification, the color adjustment is performed by the operator adjusting the dot percents. That is, similarly to the first embodiment, the processes of steps S401 to S403 in Fig. 19 are repeated. However, in the present modification, unlike the first embodiment, the operator is able to change the reference color at an appropriate timing. In this regard, in the second embodiment, when the reference color is changed, the spectral reflectances (predicted values) of each halftone patch PA3 is obtained based on the relational expression for the reference color after change, and then the dot percents are adjusted by the operator. On the other hand, in the present modification, when the reference color is changed, the dot percents are converted from the values corresponding to the reference color before the change to the values corresponding to the reference color after change via the SCTVs, and the adjustment of the dot percents by the operator is restarted based on the dot percents after the conversion. This will be described with reference to Fig. 42.

It is assumed that, at a certain time point after adjustment of the dot percents by the operator, the correspondence relationship between the input dot percents and the output dot percents is represented by a line denoted by reference numeral 83 in Fig. 42. When the operator changes the reference color in this state, the dot percent and the SCTV can be mutually converted as described above, and thus conversion from the output dot percents (dot percents being adjusted) to the SCTVs is performed as indicated by an arrow denoted by reference numeral 84 in Fig. 42 based on the correspondence relationship between the dot percents and the SCTVs for the reference color before change. As a result, for example, a "correspondence relationship between the input dot percents and the SCTVs" as represented by a line denoted by reference numeral 85 in Fig. 42 is obtained. Next, based on the correspondence relationship between the dot percents and the SCTVs for the reference color after change, conversion from the SCTVs to the output dot percents is performed as indicated by an arrow denoted by reference numeral 86 in Fig. 42. As a result, for example, a "correspondence relationship between the input dot percents and the output dot percents" as represented by a line denoted by reference numeral 87 in Fig. 42 is obtained. Then, the adjustment of the dot percents by the operator is restarted from this state.

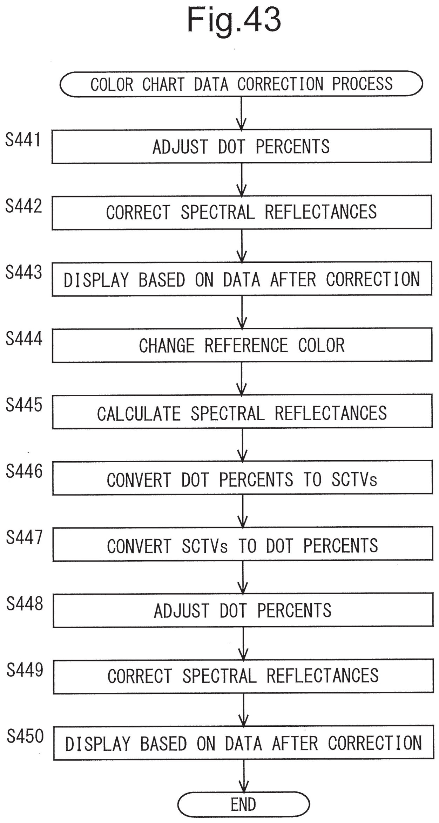

In consideration of the above, the procedure of the color chart data correction process in the present modification will be described with reference to Fig. 43. In steps S441 to S443, processes similar to those in steps S401 to S403 (see Fig. 19) in the first embodiment are performed.

Thereafter, in the same manner as in step S411 (see Fig. 30) in the second embodiment, a process of selecting a reference color by the operator is performed (step S444). As a result, the reference color is changed. At the start of step S444, since the dot percents have already been adjusted by the operator in step S441, the dot percents being adjusted is associated with the dot percent before adjustment (input dot percent) for each halftone patch PA3. After the reference color is changed, the spectral reflectances of each halftone patch PA3 are recalculated based on the reference color after change in the same manner as in step S412 in the second embodiment (step S445).

Next, as described above, a process of converting the dot percent being adjusted for each halftone patch PA3 into the SCTV is performed based on the correspondence relationship between the dot percents and the SCTVs for the reference color before change (step S446). Furthermore, as described above, a process of converting the SCTVs obtained in step S446 into the dot percents is performed based on the correspondence relationship between the dot percents and the SCTVs for the reference color after change (step S447).

Thereafter, the operator adjusts the dot percents (step S448). At that time, the adjustment of the dot percents by the operator is started (resumed) from a state in which the dot percent before adjustment (input dot percent) and the dot percent obtained in step S447 are associated with each other for each halftone patch PA3 (a state in which the graph as illustrated in Fig. 22 in which the input dot percents before adjustment are set as the input dot percents and the dot percents obtained in step S447 are set as the output dot percents is displayed). Then, correction of information on the spectral reflectances of each halftone patch PA3 in the color chart data 50 (step S449) and display based on the color chart data 50 after correction (step S450) are performed in a similar manner to steps S402 to S403 (see Fig. 19) in the first embodiment. Note that, in step S449, information on the spectral reflectances of each halftone patch PA3 in the color chart data 50 is corrected based on the spectral reflectances after recalculation in the above step S445.

In a case where the desired color has not been obtained at the end of step S450, the process in and after step S444 is executed again if the reference color needs to be changed again, and the process in and after step S448 is executed again if the reference color does not need to be changed.

Note that, in the present modification, the reference color changing step is realized by the above step S444, the spectral characteristics calculation step is realized by the above step S445, a first conversion step is realized by the above step S446, a second conversion step is realized by the above step S447, the dot percents adjustment step is realized by the above step S448, the spectral characteristics correction step is realized by the above step S449, and the image comparison screen display step is realized by the above step S450.

As above, according to the present modification, when the operator changes the reference color, the output dot percent of each halftone patch PA3 after changing the reference color corresponding to the output dot percent of each halftone patch PA3 immediately before changing the reference color is obtained via the SCTV. Although there is a possibility that the output dot percent greatly changes before and after the change of the reference color, the change in hue is small before and after the change of the reference color. Since the reference color can be changed without greatly changing the hue in this manner, the operator is able to more efficiently perform the adjustment operation for correcting information on the spectral reflectances of each patch included in the CxF chart.

<4.2 Second Modification>

In the first modification, when the reference color is changed, conversion from the output dot percents for the reference color before change to the output dot percents for the reference color after change is performed via the SCTVs (see Fig. 42). On the other hand, in the present modification, when the reference color is changed, conversion from the output dot percents for the reference color before the change to the output dot percents for the reference color after change is performed by calculation using a CIELAB values (L* value, a* value, and b* value). Details will be described below.

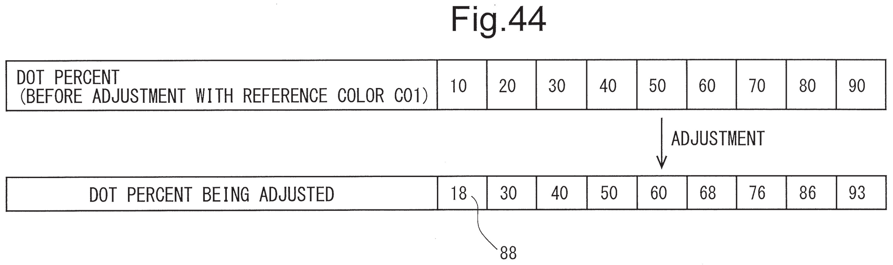

Here, it is assumed that before the reference color is changed, adjustment of the dot percents is performed by the operator as illustrated in Fig. 44 with the color C01 as the reference color. In addition, it is assumed that the reference color is changed from the color C01 to the color C02 after adjustment as illustrated in Fig. 44 is performed.

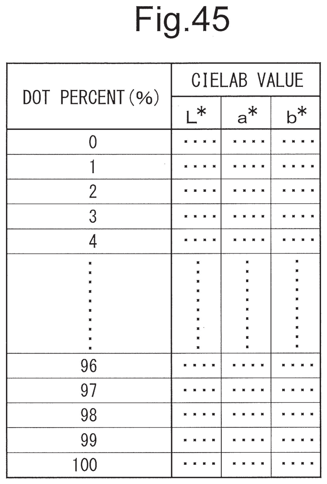

In the present modification, when the reference color is changed, the CIELAB values corresponding to the output dot percents (dot percents being adjusted) of each halftone patch PA3 for the reference color before change and the CIELAB values corresponding to the dot percent in increments of 1% for the reference color after change are obtained. In this regard, for example, when a portion denoted by reference numeral 88 in Fig. 44 is focused on, first, the spectral reflectances corresponding to the portion (output dot percent = 18%) are obtained by linear interpolation or the like from the spectral reflectances corresponding to "dot percent = 10%" in the color chart data 50 before correction and the spectral reflectances corresponding to "dot percent = 20%" in the color chart data 50 before correction. Then, after the tristimulus values X, Y, and Z are obtained from the spectral reflectances by the above Expression (8), the CIELAB values (L* value, a* value, and b* value) are obtained from the tristimulus values X, Y, and Z by a known conversion expression. In this way, the CIELAB values corresponding to the output dot percents (dot percents being adjusted) of each halftone patch PA3 for the reference color before the change are obtained. Furthermore, for the reference color after change, for example, as illustrated in Fig. 45, the CIELAB values (L* value, a* value, and b* value) corresponding to the dot percent in increments of 1% are obtained. In this regard, first, the spectral reflectances of each halftone patch PA3 for the reference color after change are obtained in a similar manner to step S412 in the second embodiment. Next, the spectral reflectances corresponding to each dot percent in increments of 1% are obtained by linear interpolation or the like. Then, for each dot percent in increments of 1%, the tristimulus values X, Y, and Z are obtained from the spectral reflectances by the above Expression (8), and then the CIELAB values (L* value, a* value, and b* value) are obtained from the tristimulus values X, Y, and Z by a known conversion expression. In this manner, the CIELAB values corresponding to the dot percent in increments of 1% for the reference color after change are obtained.

Thereafter, for each halftone patch PA3, based on the CIELAB values corresponding to the output dot percent immediately before changing the reference color and the CIELAB values corresponding to each dot percent in increments of 1% obtained for the reference color after change, the color difference is obtained for each dot percent in increments of 1%. For each halftone patch PA3, the dot percent at which the minimum color difference is obtained is adopted as the dot percent (output dot percents) at the time point of starting the readjustment.

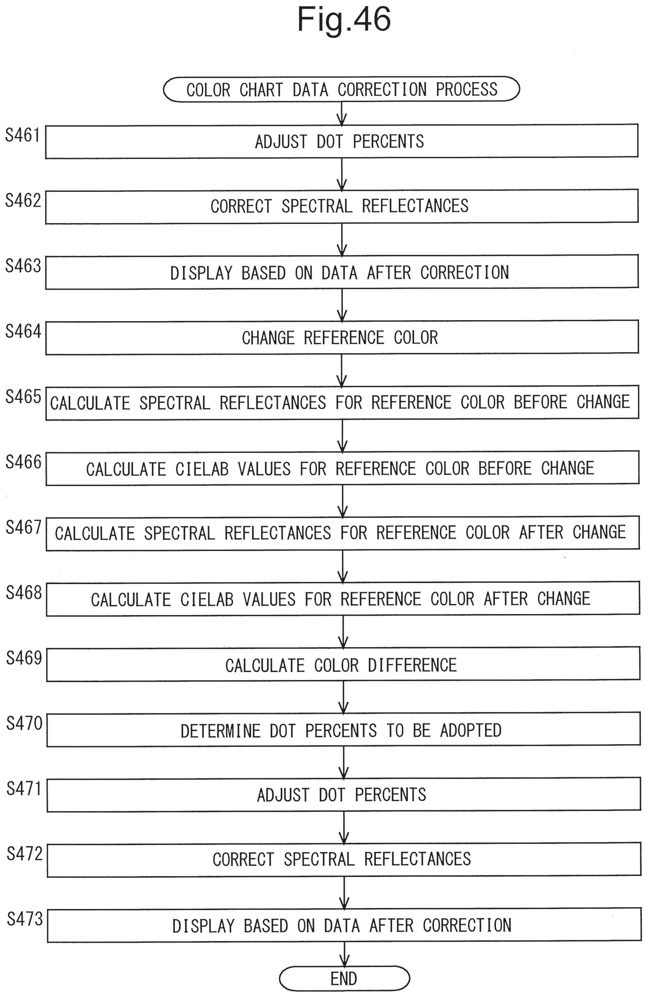

In consideration of the above, the procedure of the color chart data correction process in the present modification will be described with reference to Fig. 46. In steps S461 to S463, processes similar to those in steps S401 to S403 (see Fig. 19) in the first embodiment are performed. Thereafter, in the same manner as in step S411 (see Fig. 30) in the second embodiment, a process of selecting a reference color by the operator is performed (step S464). As a result, the reference color is changed. At the start of step S464, since the dot percents have already been adjusted by the operator in step S461, the dot percent being adjusted is associated with the dot percent before adjustment (input dot percent) for each halftone patch PA3.

After the reference color is changed, as described above, the spectral reflectances corresponding to the dot percents being adjusted are obtained for the reference color before the change by using information on the spectral reflectances in the color chart data 50 before correction (step S465). Then, based on the spectral reflectances obtained in step S465, as described above, the CIELAB values corresponding to the dot percents being adjusted of each halftone patch PA3 are obtained for the reference color before the change (step S466). Next, as described above, the spectral reflectances (including the spectral reflectances of each halftone patch PA3 for the reference color after change) corresponding to each dot percent in increments of 1% are obtained for the reference color after change (step S467). Then, based on the spectral reflectances obtained in step S467, as described above, the CIELAB values corresponding to the dot percent in increments of 1% are obtained for the reference color after change (step S468).

Thereafter, as described above, for each halftone patch PA3, a color difference based on the CIELAB values corresponding to the dot percent being adjusted and the CIELAB values corresponding to each dot percent in increments of 1% is obtained (step S469). That is, for each halftone patch PA3, the color difference for each dot percent in increments of 1% is obtained. Then, for each halftone patch PA3, the dot percent corresponding to the minimum color difference among the color differences obtained in step S469 is determined as the dot percent (output dot percent) at the readjustment start time point (step S470).

Thereafter, the operator adjusts the dot percents (step S471). At that time, the adjustment of the dot percents by the operator is started (resumed) from a state in which the dot percent before adjustment (input dot percent) and the dot percent determined in step S470 are associated with each other for each halftone patch PA3 (a state in which the graph as illustrated in Fig. 22 in which the input dot percents before adjustment are set as the input dot percents and the dot percents determined in step S470 are set as the output dot percents is displayed). Then, correction of information on the spectral reflectances of each halftone patch PA3 in the color chart data 50 (step S472) and display based on the color chart data 50 after correction (step S473) are performed in a similar manner to steps S402 to S403 (see Fig. 19) in the first embodiment.

In a case where the desired color has not been obtained at the end of step S473, the process in and after step S464 is executed again if the reference color needs to be changed again, and the process in and after step S471 is executed again if the reference color does not need to be changed.

Note that, in the present modification, the reference color changing step is realized by the above step S464, a first CIELAB values calculation step is realized by the above step S466, the spectral characteristics calculation step is realized by the above step S467, a second CIELAB values calculation step is realized by the above step S468, a color difference calculation step is realized by the above step S469, the dot percents adjustment step is realized by the above step S471, the spectral characteristics correction step is realized by the above step S472, and the image comparison screen display step is realized by the above step S473.

According to the present modification as described above, it is possible to significantly reduce the change in hue when the reference color is changed. Therefore, the operator is able to perform the adjustment operation for correcting information on the spectral reflectances of each patch included in the CxF chart very efficiently.

In the above description, the example in which the CIELAB values corresponding to each dot percent in increments of 1% (see Fig. 45) is obtained has been described, but the present invention is not limited thereto. The CIELAB values corresponding to each dot percent in increments of an appropriate range may be obtained.

<4.3 Third Modification>

In the third embodiment, the operator adjusts the SCTVs to adjust the color. Modifications related to this will be described below.

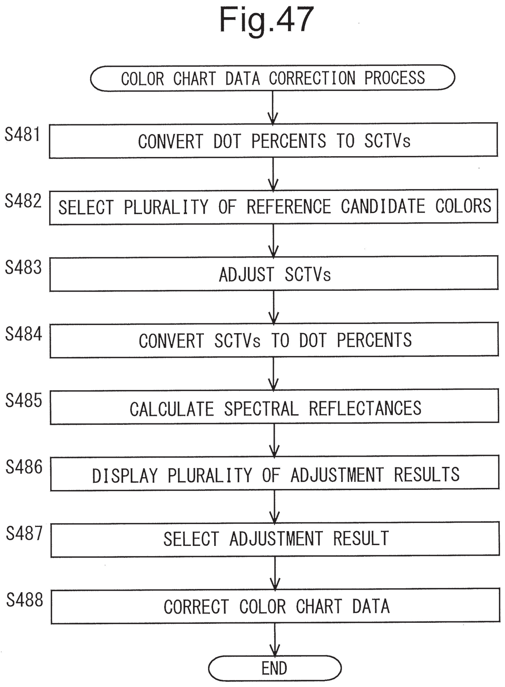

Fig. 47 is a flowchart showing a procedure of the color chart data correction process according to the present modification. After the color chart data correction process is started, first, regarding data of each of the nine halftone patches PA3 in the color chart data 50 for the prediction target color, the dot percent is converted to the SCTV in the same manner as in step S421 (see Fig. 36) in the third embodiment (step S481).

Next, the operator selects a plurality of reference candidate colors as reference color candidates (step S482). In this regard, the configuration may be such that a plurality of sample colors are selectable in the region 546 of the dialog 540 illustrated in Fig. 40, for example, and selection of a plurality of sample colors as reference candidate colors is received. In step S482, for example, four sample colors are selected from 32 sample colors. Then, the operator adjusts the SCTVs based on the converted SCTVs obtained in step 481 (step S483). Note that the adjustment of the SCTVs in step S483 is performed using, for example, the graph illustrated in Fig. 37, similarly to step S422 in the third embodiment.

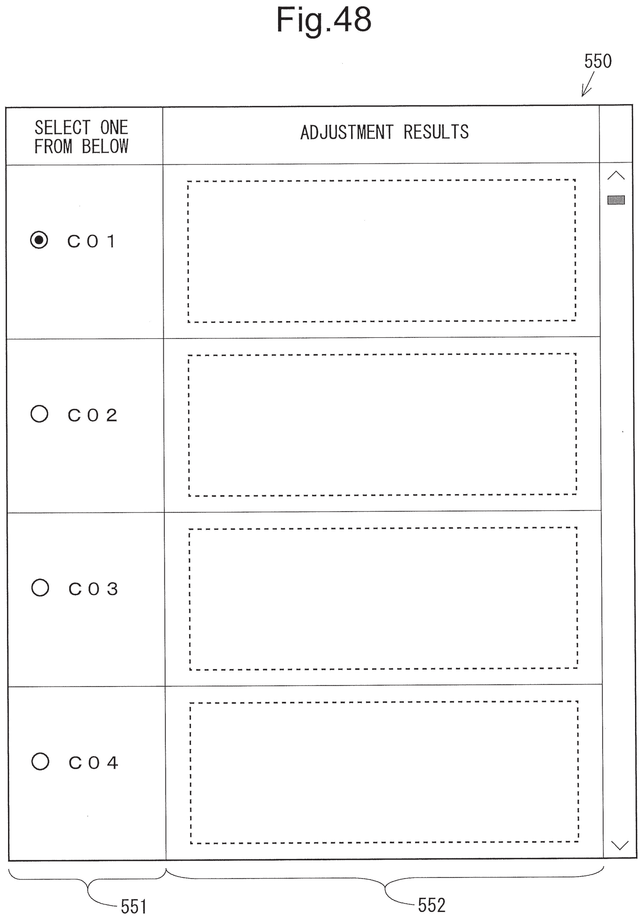

After the operator adjusts the SCTVs, for each of the plurality of reference candidate colors selected in step S482, the SCTVs after adjustment are converted into the dot percents in the same manner as in step S428 in the third embodiment (step S484). Furthermore, the spectral reflectances corresponding to the dot percents obtained in step S484 are obtained for each of the plurality of reference candidate colors selected in step S482 (step 485). Then, for example, a dialog 550 as illustrated in Fig. 48 including the adjustment result (prediction result) for each reference candidate color selected in step S482 is displayed on the display unit 16 of the print data generation apparatus 100 (step 486). The dialog 550 includes an adjustment result selection area 551 and an adjustment result display area 552. In the adjustment result display area 552, for example, a graph showing curves representing the spectral reflectances of respective patches is displayed for each reference candidate color. The operator selects any one of the reference candidate colors in the adjustment result selection area 551 (that is, one adjustment result is selected) (step 487).

Finally, the spectral reflectances (the spectral reflectances obtained in step 485) for the reference candidate color corresponding to the adjustment result selected in step S487 are adopted as the spectral reflectances in the color chart data 50 after correction. That is, information on the spectral reflectances of each halftone patch PA3 in the color chart data 50 is corrected (step S488).

Note that, in the present modification, the dot percents-SCTVs conversion step is realized by the above step S481, the reference candidate color selection step is realized by the above step S482, the SCTVs adjustment step is realized by the above step S483, the SCTVs-dot percents conversion step is realized by the above step S484, the spectral characteristics calculation step is realized by the above step S485, the adjustment result display step is realized by the above step S486, the adjustment result selection step is realized by the above step S487, and the spectral characteristics correction step is realized by the above step S488.

According to the present modification, the operator is able to confirm the adjustment results corresponding to the respective reference candidate colors on the screen at a time. Therefore, the operator is able to more efficiently perform the adjustment operation for correcting information on the spectral reflectances of each patch included in the CxF chart.

<4.4 Fourth Modification>

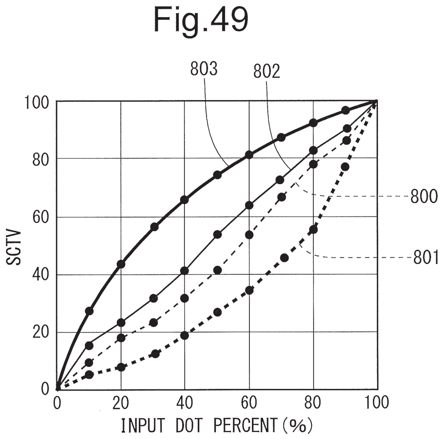

The present modification is a further modification of the third modification. In the third modification, the operator is able to select a plurality of sample colors to be candidates for the reference color before finally selecting the reference color. In the present modification, when the SCTVs are adjusted using the graph as illustrated in Fig. 37, the operator is able to try the adjustment with a plurality of adjustment patterns. If the SCTV adjustment is tried with three adjustment patterns, for example, as illustrated in Fig. 49, a line 800 before adjustment and three lines 801 to 803 after adjustment are displayed, as lines representing the "correspondence relationship between the input dot percents and the SCTVs", on the graph for the adjustment operation.

In the present modification, the dot percents after conversion are obtained for each combination of the reference candidate color and the adjustment pattern in the above step S484 (see Fig. 47), and the spectral reflectances are obtained for each combination of the reference candidate color and the adjustment pattern in the above step S485.

In the above step S486, the adjustment result (prediction result) is displayed for each combination of the reference candidate color and the adjustment pattern. If four sample colors are selected as reference candidate colors and SCTV adjustment is tried with three adjustment patterns, 12 adjustment results (for example, color samples or image samples) are displayed. The operator selects any one of the adjustment results. As a result, the spectral reflectances for the "combination of the reference candidate color and the adjustment pattern" corresponding to the selected adjustment result are adopted as the spectral reflectances in the color chart data 50 after correction.

According to the present modification, since the operator is able to confirm the adjustment results for all combinations of the reference candidate colors and the adjustment patterns at one time, it is possible to extremely efficiently perform the adjustment operation for correcting information on the spectral reflectances of each patch included in the CxF chart.

<5. Regarding spectral characteristics to be used>

In each of the above embodiments, the color prediction process and the color chart data correction process are performed using spectral reflectances. However, the present invention is not limited thereto, and the color prediction process and the color chart data correction process may be performed using spectral characteristics other than spectral reflectances. Examples of spectral characteristics other than spectral reflectances include spectral absorption factors (values each obtained by subtracting the spectral reflectance from 1) and spectral absorption coefficients $\alpha$ each obtained from the following Equation (9). When the reflectance of paper white at a certain wavelength is $R_0$, the reflectance of the corresponding patch is R, and the thickness of the ink is x, the spectral absorption coefficient $\alpha$ is expressed by the following Equation (9) when multiple reflection is not considered.

$$\alpha = -(1/(2x)) \cdot \ln(R/R_0) \quad \dots \quad (9)$$

Further, in each of the above embodiments, color prediction is performed using a relational equation representing the relationship between the spectral reflectances of the solid patch PA2 and the spectral reflectances of the color prediction target patch (each halftone patch). However, the relationship represented by the relational equation is not limited thereto. For example, color prediction may be performed using a relational equation representing the relationship between the spectral absorption factors of the solid patch PA2 and the spectral absorption factors of the color prediction target patch, or a relational equation representing the relationship between the spectral reflectances of the solid patch PA2 and the spectral absorption factors of the color prediction target patch.

<6. Others>

The present invention is not limited to each of the above-described embodiments (as well as modifications), and various variations can be made without departing from the spirit of the present invention. For example, although the example in which the printing paper is used as the print medium has been described in each of the embodiments (as well as the modifications), the present invention can also be applied to a case where various films, various labels, and the like are used as the print medium. Moreover, the present invention can also be embodied by appropriately combining the above embodiments and modifications so that there is no inconsistency.

A first aspect of the invention is a color chart data correction method for correcting color chart data including information of patches of a color chart including a solid patch, a medium color patch, and a plurality of halftone patches, the solid patch being a patch where an ink is applied to a print medium with a maximum ink density, the medium color patch being a patch where the ink is not applied to the print medium, the plurality of halftone patches being patches where the ink is applied to the print medium with a plurality of levels of ink densities between the solid patch and the medium color patch, the color chart data being data in which a dot percent and spectral characteristics are associated with each other for each patch, the color chart data correction method comprising:

a dot percents adjustment step (S401, S413, S448, S471) of associating, for the plurality of halftone patches, dot percents in the color chart data with dot percents after adjustment by an operator making adjustment of dot percents of halftone patches; and

a spectral characteristics correction step (S402, S414, S449, S472) of, after the dot percents adjustment step, correcting the spectral characteristics of the plurality of halftone patches in the color chart data by a computer, so that, regarding the plurality of halftone patches, spectral characteristics corresponding to the dot percents after adjustment are associated with the dot percents in the color chart data.

A second aspect of the invention is the color chart data correction method according to the first aspect, further comprising:

a reference color changing step (S411, S444, S464) of, before the dot percents adjustment step (S401, S413, S448, S471), changing, by the operator, a reference color selected in advance, the reference color being a color for which information of spectral characteristics is referred when spectral characteristics of the plurality of halftone patches in the color chart data are calculated; and

a spectral characteristics calculation step (S412, S445, S467) of, after the reference color changing step (S411, S444, S464), calculating the spectral characteristics corresponding to the dot percents in the color chart data for the plurality of halftone patches, by the compute applying the spectral characteristics of the solid patch for a color to be processed to a relational expression representing the relationship, for the reference color after change, between the spectral characteristics of the solid patch and the spectral characteristics of each halftone patch, wherein

in the spectral characteristics correction step (S402, S414, S449, S472), corrected spectral characteristics of the plurality of halftone patches are obtained based on the spectral characteristics calculated in the spectral characteristics calculation step (S412, S445, S467).

A third aspect of the invention is the color chart data correction method according to the second aspect, wherein

at a time when the reference color changing step (S411, S444, S464) starts, by the operator having already made adjustment of the dot percents of halftone patches, the dot percents being adjusted for the plurality of halftone patches are associated with the dot percents in the color chart data,

the color chart data correction method further comprises:

a first conversion step (S446) of, after the reference color changing step (S411, S444, S464), converting, by the computer, the dot percents being adjusted for the plurality of halftone patches into SCTVs, based on a correspondence relationship between dot percents for the reference color before change and SCTVs calculated in accordance with ISO 20654; and

a second conversion step (S447) of, after the first conversion step (S446), converting, by the computer, the SCTVs obtained in the first conversion step (S446) into dot percents based on a correspondence relationship between the dot percents for the reference color after change and SCTVs, and

in the dot percents adjustment step (S401, S413, S448, S471), the adjustment of the dot percents of the halftone patches by the operator is started from a state in which for each halftone patch, a dot percent in the color chart data and a dot percent obtained in the second conversion step (S447) are associated with each other.

A fourth aspect of the invention is the color chart data correction method according to the second aspect, wherein

at a time when the reference color changing step (S411, S444, S464) starts, by the operator having already made adjustment of the dot percents of the halftone patches, the dot percents being adjusted for the plurality of halftone patches are associated with the dot percents in the color chart data,

the color chart data correction method further comprises:

a first CIELAB values calculating step (S466) of, after the reference color changing step (S411, S444, S464), calculating, by the computer, CIELAB values corresponding to the dot percents being adjusted for the reference color before the change;

a second CIELAB values calculating step (S468) of, after the reference color changing step (S411, S444, S464), calculating, by the computer, CIELAB values corresponding to each dot percent in an appropriate range of increments for the reference color after the change; and

a color difference calculation step (S469) of, after the first CIELAB values calculating step (S466) and the second CIELAB values calculating step (S468), calculating, by the computer, a color difference for each halftone patch based on the CIELAB values corresponding to the dot percents being adjusted and the CIELAB values corresponding to each dot percent in the appropriate range of increments, and

in the dot percents adjustment step (S401, S413, S448, S471), the adjustment of the dot percents of the halftone patches by the operator is started from a state in which for each halftone patch, a dot percent in the color chart data and a dot percent at which a minimum color difference is obtained among from the dot percents in the appropriate range of increments in the color difference calculation step (S469) are associated with each other.

A fifth aspect of the invention is the color chart data correction method according to the second aspect, wherein in the reference color changing step (S411, S444, S464), the operator is able to select the reference color after change from among a plurality of colors for which spectral characteristics of the solid patch, the medium color patch, and the plurality of halftone patches are obtained, and a plurality of virtual colors for which a dot gain is artificially generated.

A sixth aspect of the invention is the color chart data correction method according to the second aspect, wherein in the spectral characteristics correction step (S402, S414, S449, S472), the spectral characteristics corresponding to the dot percents after adjustment are calculated by performing interpolation calculation using the spectral characteristics for the plurality of halftone patches calculated in the spectral characteristics calculation step (S412, S445, S467).

A seventh aspect of the invention is the color chart data correction method according to the first aspect, wherein in the spectral characteristics correction step (S402, S414, S449, S472), spectral characteristics corresponding to the dot percents after adjustment are calculated by performing interpolation calculation using the spectral characteristics in the color chart data for the plurality of halftone patches.

An eighth aspect of the invention is the color chart data correction method according to the first aspect, wherein in the dot percents adjustment step (S401, S413, S448, S471), when the operator adjusts a dot percent of one of the plurality of halftone patches, the computer obtains the dot percents after adjustment for all of the plurality of halftone patches.

A ninth aspect of the invention is the color chart data correction method according to the first aspect, further comprising:

an image comparison screen display step (S403, S415, S425, S430, S450, S473) of, after the spectral characteristics correction step (S402, S414, S449, S472), having the computer display a screen in which a color image based on the color chart data before correction and a color image based on the color chart data after correction are arranged.

A tenth aspect of the invention is the color chart data correction method according to the first aspect, further comprising:

a color chart data storing step of, after the spectral characteristics correction step (S402, S414, S449, S472), having the computer store, as a file, the color chart data in which the spectral characteristics of the plurality of halftone patches are corrected.

An eleventh aspect of the invention is a color chart data correction method for correcting color chart data including information of patches of a color chart including a solid patch, a medium color patch, and a plurality of halftone patches, the solid patch being a patch where an ink is applied to a print medium with a maximum ink density, the medium color patch being a patch where the ink is not applied to the print medium, the plurality of halftone patches being patches where the ink is applied to the print medium with a plurality of levels of ink densities between the solid patch and the medium color patch, the color chart data being data in which a dot percent and spectral characteristics are associated with each other for each patch, the color chart data correction method comprising:

a dot percents-SCTVs conversion step (S421) of converting dot percents of the plurality of halftone patches in the color chart data into SCTVs calculated in accordance with ISO 20654 by a computer;

an SCTVs adjustment step (S422, S427) of, after the dot percents-SCTVs conversion step (S421), associating, for the plurality of halftone patches, the dot percents in the color chart data with SCTVs after adjustment by an operator making adjustment of SCTVs of halftone patches;

an SCTVs-dot percents conversion step (S423, S428) of, after the SCTVs adjustment step (S422, S427), converting the SCTVs after adjustment for the plurality of halftone patches into dot percents by the computer; and

a spectral characteristics correction step (S424, S429) of, after the SCTVs-dot percents conversion step (S423, S428), correcting the spectral characteristics of the plurality of halftone patches in the color chart data by the computer so that, regarding the plurality of halftone patches, the spectral characteristics corresponding to the dot percents obtained in the SCTVs-dot percents conversion step (S423, S428) are associated with the dot percents in the color chart data.

A twelfth aspect of the invention is the color chart data correction method according to the eleventh aspect, wherein

a color adjustment step including the SCTVs adjustment step (S422, S427), the SCTVs-dot percents conversion step (S423, S428), and the spectral characteristics correction step (S424, S429) is repeated twice,
the color chart data correction method further comprises:

a reference color changing step (S426) of, after the color adjustment step of first time and before the color adjustment step of second time, changing, by the operator, a reference color selected in advance, the reference color being a color for which information on spectral characteristics is referred when spectral characteristics of the plurality of halftone patches in the color chart data are calculated, and
in the SCTVs adjustment step (S422, S427) in the color adjustment step of second time, the adjustment of the SCTVs of the halftone patches by the operator is started from a state in which for each halftone patch, a dot percent in the color chart data and a SCTV after adjustment in the SCTVs adjustment step (S422, S427) in the color adjustment step of first time are associated with each other.

A thirteenth aspect of the invention is the color chart data correction method according to the eleventh aspect, wherein
in the spectral characteristics correction step (S424, S429), spectral characteristics corresponding to the dot percents obtained in the SCTVs-dot percents conversion step (S423, S428) are calculated by performing interpolation calculation using the spectral characteristics in the color chart data for the plurality of halftone patches.

A fourteenth aspect of the invention is the color chart data correction method according to the eleventh aspect, further comprising:
an image comparison screen display step (S425, S430) of, after the spectral characteristics correction step (S424, S429), having the computer display a screen in which a color image based on the color chart data before correction and a color image based on the color chart data after correction are arranged.

A fifteenth aspect of the invention is the color chart data correction method according to the eleventh aspect, further comprising:
a color chart data storing step of, after the spectral characteristics correction step (S424, S429), having the computer store, as a file, the color chart data in which the spectral characteristics of the plurality of halftone patches are corrected.

A sixteenth aspect of the invention is a color chart data correction method for correcting color chart data including information of patches of a color chart including a solid patch, a medium color patch, and a plurality of halftone patches, the solid patch being a patch where an ink is applied to a print medium with a maximum ink density, the medium color patch being a patch where the ink is not applied to the print medium, the plurality of halftone patches being patches where the ink is applied to the print medium with a plurality of levels of ink densities between the solid patch and the medium color patch, the color chart data being data in which a dot percent and spectral characteristics are associated with each other for each patch, the color chart data correction method comprising:

a dot percents-SCTVs conversion step (S481) of converting dot percents of the plurality of halftone patches in the color chart data into SCTVs calculated in accordance with ISO 20654 by a computer;
a reference candidate color selection step (S482) of selecting, by an operator, a plurality of reference candidate colors that are candidates for a reference color, the reference color being a color for which information on spectral characteristics is referred when spectral characteristics of the plurality of halftone patches in the color chart data are calculated;
an SCTVs adjustment step (S483) of, after the dot percents-SCTVs conversion step (S481) and the reference candidate color selection step (S482), of associating, for the plurality of halftone patches, the dot percents in the color chart data with SCTVs after adjustment by the operator making adjustment of SCTVs of halftone patches;
an SCTVs-dot percents conversion step (S484) of, after the SCTVs adjustment step (S483), converting the SCTVs after adjustment for the plurality of halftone patches into dot percents by the computer for each of the plurality of reference candidate colors;
a spectral characteristics calculation step (S485) of, after the SCTVs-dot percents conversion step (S484), obtaining spectral characteristics corresponding to the dot percents obtained in the SCTVs-dot percents conversion step (S484) for the plurality of halftone patches, by the computer, for each of the plurality of reference candidate colors;
an adjustment result display step (S486) of, after the spectral characteristics calculation step (S485), displaying, by the computer, a plurality of adjustment results respectively corresponding to the plurality of reference candidate colors based on the spectral characteristics obtained in the spectral characteristics calculation step (S485);
an adjustment result selection step (S487) of, after the adjustment result display step (S486), selecting one of the plurality of adjustment results by the operator; and
a spectral characteristics correction step (S488) of correcting, according to the adjustment result selected in the adjustment result selection step (S487), the spectral characteristics of the plurality of halftone patches in the color chart data by the computer, so that, regarding the plurality of halftone patches, the spectral characteristics obtained in the spectral characteristics calculation step (S485) are associated with the dot percents in the color chart data.

A seventeenth aspect of the invention is the color chart data correction method according to the sixteenth aspect, wherein

in the SCTVs adjustment step (S483), the operator is able to adjust the SCTVs with a plurality of adjustment patterns, and

in the adjustment result display step (S486), a plurality of adjustment results are displayed for respective combinations of the reference candidate colors and the adjustment patterns.

An eighteenth aspect of the invention is a color chart data correction program for correcting color chart data including information of patches of a color chart including a solid patch, a medium color patch, and a plurality of halftone patches, the solid patch being a patch where an ink is applied to a print medium with a maximum ink density, the medium color patch being a patch where the ink is not applied to the print medium, the plurality of halftone patches being patches where the ink is applied to the print medium with a plurality of levels of ink densities between the solid patch and the medium color patch, the color chart data being data in which a dot percent and spectral characteristics are associated with each other for each patch, the color chart data correction program causing a computer to execute:

a dot percents adjustment step (S401, S413, S448, S471) of accepting operation of adjustment, by an operator, of dot percents of halftone patches, and associating, for the plurality of halftone patches, dot percents in the color chart data with dot percents after adjustment; and

a spectral characteristics correction step (S402, S414, S449, S472) of, after the dot percents adjustment step, correcting the spectral characteristics of the plurality of halftone patches in the color chart data, so that, regarding the plurality of halftone patches, spectral characteristics corresponding to the dot percents after adjustment are associated with the dot percents in the color chart data.

A nineteenth aspect of the invention is a color chart data correction program for correcting color chart data including information of patches of a color chart including a solid patch, a medium color patch, and a plurality of halftone patches, the solid patch being a patch where an ink is applied to a print medium with a maximum ink density, the medium color patch being a patch where the ink is not applied to the print medium, the plurality of halftone patches being patches where the ink is applied to the print medium with a plurality of levels of ink densities between the solid patch and the medium color patch, the color chart data being data in which a dot percent and spectral characteristics are associated with each other for each patch, the color chart data correction program causing a computer to execute:

a dot percents-SCTVs conversion step (S421) of converting dot percents of the plurality of halftone patches in the color chart data into SCTVs calculated in accordance with ISO 20654;

an SCTVs adjustment step (S422, S427) of, after the dot percents-SCTVs conversion step (S421), accepting adjustment of SCTVs of halftone patches by an operator, and associating, for the plurality of halftone patches, the dot percents in the color chart data with SCTVs after adjustment;

an SCTVs-dot percents conversion step (S423, S428) of, after the SCTVs adjustment step (S422, S427), converting the SCTVs after adjustment for the plurality of halftone patches into dot percents; and

a spectral characteristics correction step (S424, S429) of, after the SCTVs-dot percents conversion step (S423, S428), correcting the spectral characteristics of the plurality of halftone patches in the color chart data so that, regarding the plurality of halftone patches, the spectral characteristics corresponding to the dot percents obtained in the SCTVs-dot percents conversion step (S423, S428) are associated with the dot percents in the color chart data.

A twentieth aspect of the invention is a color chart data correction program for correcting color chart data including information of patches of a color chart including a solid patch, a medium color patch, and a plurality of halftone patches, the solid patch being a patch where an ink is applied to a print medium with a maximum ink density, the medium color patch being a patch where the ink is not applied to the print medium, the plurality of halftone patches being patches where the ink is applied to the print medium with a plurality of levels of ink densities between the solid patch and the medium color patch, the color chart data being data in which a dot percent and spectral characteristics are associated with each other for each patch, the color chart data correction program causing a computer to execute:

a dot percents-SCTVs conversion step (S481) of converting dot percents of the plurality of halftone patches in the color chart data into SCTVs calculated in accordance with ISO 20654;

a reference candidate color selection step (S482) of accepting selection by an operator of a plurality of reference candidate colors that are candidates for a reference color, the reference color being a color for which information on spectral characteristics is referred when spectral characteristics of the plurality of halftone patches in the color chart data are calculated;

an SCTVs adjustment step (S483) of, after the dot percents-SCTVs conversion step (S481) and the reference candidate color selection step (S482), accepting adjustment by the operator of SCTVs of halftone patches, and associating, for the plurality of halftone patches, the dot percents in the color chart data with SCTVs after adjustment;

an SCTVs-dot percents conversion step (S484) of, after the SCTVs adjustment step (S483), converting the SCTVs after adjustment for the plurality of halftone patches into dot percents for each of the plurality of reference candidate colors;

a spectral characteristics calculation step (S485) of, after the SCTVs-dot percents conversion step (S484), obtaining spectral characteristics corresponding to the dot percents obtained in the SCTVs-dot percents conversion step (S484) for the plurality of halftone patches for each of the plurality of reference candidate colors;

an adjustment result display step (S486) of, after the spectral characteristics calculation step (S485), displaying a plurality of adjustment results respectively corresponding to the plurality of reference candidate colors based on the spectral characteristics obtained in the spectral characteristics calculation step (S485);

an adjustment result selection step (S487) of, after the adjustment result display step (S486), accepting selection of one of the plurality of adjustment results by the operator; and

a spectral characteristics correction step (S488) of correcting, according to the adjustment result selected in the adjustment result selection step (S487), the spectral characteristics of the plurality of halftone patches in the color chart data, so that, regarding the plurality of halftone patches, the spectral characteristics obtained in the spectral characteristics calculation step (S485) are associated with the dot percents in the color chart data.

## Claims

1. A color chart data correction method for correcting color chart data including information of patches of a color chart including a solid patch, a medium color patch, and a plurality of halftone patches, the solid patch being a patch where an ink is applied to a print medium with a maximum ink density, the medium color patch being a patch where the ink is not applied to the print medium, the plurality of halftone patches being patches where the ink is applied to the print medium with a plurality of levels of ink densities between the solid patch and the medium color patch, the color chart data being data in which a dot percent and spectral characteristics are associated with each other for each patch, the color chart data correction method comprising:

   a dot percents-SCTVs conversion step (S421) of converting dot percents of the plurality of halftone patches in the color chart data into SCTVs calculated in accordance with ISO 20654 by a computer;
   an SCTVs adjustment step (S422, S427) of, after the dot percents-SCTVs conversion step (S421), associating, for the plurality of halftone patches, the dot percents in the color chart data with SCTVs after adjustment by an operator making adjustment of SCTVs of halftone patches;
   an SCTVs-dot percents conversion step (S423, S428) of, after the SCTVs adjustment step (S422, S427), converting the SCTVs after adjustment for the plurality of halftone patches into dot percents by the computer; and
   a spectral characteristics correction step (S424, S429) of, after the SCTVs-dot percents conversion step (S423, S428), correcting the spectral characteristics of the plurality of halftone patches in the color chart data by the computer so that, regarding the plurality of halftone patches, the spectral characteristics corresponding to the dot percents obtained in the SCTVs-dot percents conversion step (S423, S428) are associated with the dot percents in the color chart data.

2. The color chart data correction method according to claim 1, wherein

   a color adjustment step including the SCTVs adjustment step (S422, S427), the SCTVs-dot percents conversion step (S423, S428), and the spectral characteristics correction step (S424, S429) is repeated twice,
   the color chart data correction method further comprises:

   a reference color changing step (S426) of, after the color adjustment step of first time and before the color adjustment step of second time, changing, by the operator, a reference color selected in advance, the reference color being a color for which information on spectral characteristics is referred when spectral characteristics of the plurality of halftone patches in the color chart data are calculated, and
   in the SCTVs adjustment step (S422, S427) in the color adjustment step of second time, the adjustment of the SCTVs of the halftone patches by the operator is started from a state in which for each halftone patch, a dot percent in the color chart data and a SCTV after adjustment in the SCTVs adjustment step (S422, S427) in the color adjustment step of first time are associated with each other.

3.  The color chart data correction method according to claim 1, wherein
in the spectral characteristics correction step (S424, S429), spectral characteristics corresponding to the dot percents obtained in the SCTVs-dot percents conversion step (S423, S428) are calculated by performing interpolation calculation using the spectral characteristics in the color chart data for the plurality of halftone patches.

4.  The color chart data correction method according to claim 1, further comprising:
an image comparison screen display step (S425, S430) of, after the spectral characteristics correction step (S424, S429), having the computer display a screen in which a color image based on the color chart data before correction and a color image based on the color chart data after correction are arranged.

5.  The color chart data correction method according to claim 1, further comprising:
a color chart data storing step of, after the spectral characteristics correction step (S424, S429), having the computer store, as a file, the color chart data in which the spectral characteristics of the plurality of halftone patches are corrected.

6.  A color chart data correction program for correcting color chart data including information of patches of a color chart including a solid patch, a medium color patch, and a plurality of halftone patches, the solid patch being a patch where an ink is applied to a print medium with a maximum ink density, the medium color patch being a patch where the ink is not applied to the print medium, the plurality of halftone patches being patches where the ink is applied to the print medium with a plurality of levels of ink densities between the solid patch and the medium color patch, the color chart data being data in which a dot percent and spectral characteristics are associated with each other for each patch, the color chart data correction program causing a computer to execute the method according to claim 1.

7.  A color chart data correction method for correcting color chart data including information of patches of a color chart including a solid patch, a medium color patch, and a plurality of halftone patches, the solid patch being a patch where an ink is applied to a print medium with a maximum ink density, the medium color patch being a patch where the ink is not applied to the print medium, the plurality of halftone patches being patches where the ink is applied to the print medium with a plurality of levels of ink densities between the solid patch and the medium color patch, the color chart data being data in which a dot percent and spectral characteristics are associated with each other for each patch, the color chart data correction method comprising:

a dot percents-SCTVs conversion step (S481) of converting dot percents of the plurality of halftone patches in the color chart data into SCTVs calculated in accordance with ISO 20654 by a computer;
a reference candidate color selection step (S482) of selecting, by an operator, a plurality of reference candidate colors that are candidates for a reference color, the reference color being a color for which information on spectral characteristics is referred when spectral characteristics of the plurality of halftone patches in the color chart data are calculated;
an SCTVs adjustment step (S483) of, after the dot percents-SCTVs conversion step (S481) and the reference candidate color selection step (S482), of associating, for the plurality of halftone patches, the dot percents in the color chart data with SCTVs after adjustment by the operator making adjustment of SCTVs of halftone patches;
an SCTVs-dot percents conversion step (S484) of, after the SCTVs adjustment step (S483), converting the SCTVs after adjustment for the plurality of halftone patches into dot percents by the computer for each of the plurality of reference candidate colors;
a spectral characteristics calculation step (S485) of, after the SCTVs-dot percents conversion step (S484), obtaining spectral characteristics corresponding to the dot percents obtained in the SCTVs-dot percents conversion step (S484) for the plurality of halftone patches, by the computer, for each of the plurality of reference candidate colors;
an adjustment result display step (S486) of, after the spectral characteristics calculation step (S485), displaying, by the computer, a plurality of adjustment results respectively corresponding to the plurality of reference candidate colors based on the spectral characteristics obtained in the spectral characteristics calculation step (S485);
an adjustment result selection step (S487) of, after the adjustment result display step (S486), selecting one of the plurality of adjustment results by the operator; and
a spectral characteristics correction step (S488) of correcting, according to the adjustment result selected in the adjustment result selection step (S487), the spectral characteristics of the plurality of halftone patches in the color chart data by the computer, so that, regarding the plurality of halftone patches, the spectral characteristics obtained in the spectral characteristics calculation step (S485) are associated with the dot percents in the color chart data.

8. The color chart data correction method according to claim 7, wherein

   in the SCTVs adjustment step (S483), the operator is able to adjust the SCTVs with a plurality of adjustment patterns, and
   in the adjustment result display step (S486), a plurality of adjustment results are displayed for respective combinations of the reference candidate colors and the adjustment patterns.

9. A color chart data correction program for correcting color chart data including information of patches of a color chart including a solid patch, a medium color patch, and a plurality of halftone patches, the solid patch being a patch where an ink is applied to a print medium with a maximum ink density, the medium color patch being a patch where the ink is not applied to the print medium, the plurality of halftone patches being patches where the ink is applied to the print medium with a plurality of levels of ink densities between the solid patch and the medium color patch, the color chart data being data in which a dot percent and spectral characteristics are associated with each other for each patch, the color chart data correction program causing a computer to execute the method according to claim 7.

# Fig.1

# Fig.2

# Fig.3

| WAVELENGTH → | 380 | 390 | 400 | · · · · · · · · · · · · · · · | 710 | 720 | 730 |
|---|---|---|---|---|---|---|---|
| 0 | 0.01 | · · · · | · · · · | · · · · · · · · · · · · · · · | · · · · | · · · · | · · · · |
| 10 | 0.02 | · · · · | · · · · | · · · · · · · · · · · · · · · | · · · · | · · · · | · · · · |
| 20 | 0.03 | · · · · | · · · · | · · · · · · · · · · · · · · · | · · · · | · · · · | · · · · |
| 30 | 0.04 | · · · · | · · · · | · · · · · · · · · · · · · · · | · · · · | · · · · | · · · · |
| 40 | 0.05 | · · · · | · · · · | · · · · · · · · · · · · · · · | · · · · | · · · · | · · · · |
| 50 | 0.06 | · · · · | · · · · | · · · · · · · · · · · · · · · | · · · · | · · · · | · · · · |
| 60 | 0.07 | · · · · | · · · · | · · · · · · · · · · · · · · · | · · · · | · · · · | · · · · |
| 70 | 0.09 | · · · · | · · · · | · · · · · · · · · · · · · · · | · · · · | · · · · | · · · · |
| 80 | 0.10 | · · · · | · · · · | · · · · · · · · · · · · · · · | · · · · | · · · · | · · · · |
| 90 | 0.11 | · · · · | · · · · | · · · · · · · · · · · · · · · | · · · · | · · · · | · · · · |
| 100 | 0.13 | · · · · | · · · · | · · · · · · · · · · · · · · · | · · · · | · · · · | · · · · |

50

53

51

52

# Fig.4

# Fig.5

```
                    ┌─────────────┐
                    │    START    │
                    └─────────────┘
                           │
                           ▼
S10   ┌──────────────────────────────────────────┐
      │      PREDICT SPECTRAL REFLECTANCES        │
      │      (COLOR PREDICTION PROCESS)           │
      └──────────────────────────────────────────┘
                           │
                           ▼
S20   ┌──────────────────────────────────────────┐
      │              CONFIRM COLOR                │
      └──────────────────────────────────────────┘
                           │
                           ▼
S30              ╱◇◇◇◇◇◇◇◇◇◇◇◇◇◇◇◇◇◇◇◇◇◇╲         No
            ╱ IS CORRECTION NECESSARY? ╲──────────┐
             ╲◇◇◇◇◇◇◇◇◇◇◇◇◇◇◇◇◇◇◇◇◇◇╱            │
                           │ Yes                   │
                           ▼                       │
S40   ┌──────────────────────────────────────────┐│
      │      CORRECT SPECTRAL REFLECTANCES        ││
      │ (COLOR CHART DATA CORRECTION PROCESS)     ││
      └──────────────────────────────────────────┘│
                                                   │
                           ▼                       │
                    ┌─────────────┐                │
                    │     END     │◄───────────────┘
                    └─────────────┘
```

# Fig.6

COLORIMETRY

COLORIMETRY

CxF CHART

TEACHING DATA

(LEARNING STAGE)

NEURAL NETWORK —73

(PREDICTION STAGE)

SPECTRAL REFLECTANCES OF
SOLID PATCH FOR PREDICTION
TARGET COLOR

# Fig.7

INPUT LAYER    HIDDEN LAYER    OUTPUT LAYER

# Fig.8

73

76(1) → SQUARE ERROR ← 77(1)

76(2) → SQUARE ERROR ← 77(2)

76(3) → SQUARE ERROR ← 77(3)

76(4) → SQUARE ERROR ← 77(4)

CORRECT
ANSWER
DATA

76(36) → SQUARE ERROR ← 77(36)

OUTPUT
LAYER

SUM OF SQUARE ERRORS

# Fig.9

73(1)
NEURAL
NETWORK

73(2)
NEURAL
NETWORK

73(3)
NEURAL
NETWORK

73(4)
NEURAL
NETWORK

73(5)
NEURAL
NETWORK

73(6)
NEURAL
NETWORK

73(7)
NEURAL
NETWORK

73(8)
NEURAL
NETWORK

73(9)
NEURAL
NETWORK

73(10)
NEURAL
NETWORK

73(11)
NEURAL
NETWORK

# Fig.10

```
( COLOR PREDICTION PROCESS )
              │
              ▼
S200  ┌─────────────────────────────────────┐  ┐
      │        OBTAIN TEACHING DATA          │  │
      └─────────────────────────────────────┘  │
              │                                 ├ 78
              ▼                                 │
S210  ┌─────────────────────────────────────┐  │
      │              LEARN                   │  │
      └─────────────────────────────────────┘  ┘
              │
              ▼
S220  ┌─────────────────────────────────────┐  ┐
      │ MEASURE SPECTRAL REFLECTANCES OF SOLID PATCH │
      │ FOR PREDICTION TARGET COLOR         │  │
      └─────────────────────────────────────┘  ├ 79
              │                                 │
              ▼                                 │
S230  ┌─────────────────────────────────────┐  │
      │  INFER (PREDICT SPECTRAL REFLECTANCES) │
      └─────────────────────────────────────┘  ┘
              │
              ▼
          (  END  )
```

# Fig.11

```
( OBTAIN TEACHING DATA )
              │
              ▼
S202  ┌─────────────────────────────────────┐
      │          PRINT CxF CHART             │
      └─────────────────────────────────────┘
              │
              ▼
S204  ┌─────────────────────────────────────┐
      │     MEASURE SPECTRAL REFLECTANCES    │
      └─────────────────────────────────────┘
              │
              ▼
          ( RESUME )
```

# Fig.12

PRINT DATA
GENERATION
APPARATUS
— 100

→ Dch →

PLATE
MAKING
APPARATUS
— 200

→ PL →

PRINTING
APPARATUS
— 300

→ CH →

COLORIMETER
— 400

→ Dcm

# Fig.13

COLOR PREDICTION PROCESS

S310   SELECT REFERENCE COLOR

S320   CALCULATE RELATIONAL EXPRESSION

S330   PREDICT SPECTRAL REFLECTANCES

END

## Fig.14

| WAVELENGTH | PREDICTION TARGET COLOR | SAMPLE COLOR (C1) | SAMPLE COLOR (C2) | · · · · · |
|---|---|---|---|---|
| 380 | Re (1) | Rs (1) (1) | Rs (2) (1) | · · · · · |
| 390 | Re (2) | Rs (1) (2) | Rs (2) (2) | · · · · · |
| 400 | Re (3) | Rs (1) (3) | Rs (2) (3) | · · · · · |
| ⋮ | ⋮ | ⋮ | ⋮ | ⋮ |
| 710 | Re (34) | Rs (1) (34) | Rs (2) (34) | · · · · · |
| 720 | Re (35) | Rs (1) (35) | Rs (2) (35) | · · · · · |
| 730 | Re (36) | Rs (1) (36) | Rs (2) (36) | · · · · · |

## Fig.15

## Fig.16

# Fig.17

# Fig.18

# Fig.19

COLOR CHART DATA CORRECTION PROCESS

S401　ADJUST DOT PERCENTS

S402　CORRECT SPECTRAL REFLECTANCES

S403　DISPLAY BASED ON DATA AFTER CORRECTION

END

# Fig.20

# Fig.21

# Fig.22

# Fig.23

| INPUT DOT PERCENT | 10 | 20 | 30 | 40 | 50 | 60 | 70 | 80 | 90 |
|---|---|---|---|---|---|---|---|---|---|
| OUTPUT DOT PERCENT | 18 | 30 | 40 | 50 | 60 | 68 | 76 | 86 | 93 |

# Fig.24

# Fig.25

# Fig.26

510

514

BEFORE CORRECTION   AFTER CORRECTION

# Fig.27

# Fig.28

# Fig.29

520

ADJUST OUTPUT DOT PERCENTS

| INPUT DOT PERCENT | 10 | 20 | 30 | 40 | 50 | 60 | 70 | 80 | 90 |
|---|---|---|---|---|---|---|---|---|---|
| OUTPUT DOT PERCENT | 10 | 20 | 30 | 40 | 50 | 60 | 70 | 80 | 90 |

# Fig.30

COLOR CHART DATA CORRECTION PROCESS

S411 — CHANGE REFERENCE COLOR

S412 — CALCULATE SPECTRAL REFLECTANCES

S413 — ADJUST DOT PERCENTS

S414 — CORRECT SPECTRAL REFLECTANCES

S415 — DISPLAY BASED ON DATA AFTER CORRECTION

END

# Fig.31

# Fig.32

| DOT PERCENT | 10 | 20 | 30 | 40 | 50 | 60 | 70 | 80 | 90 |
|---|---|---|---|---|---|---|---|---|---|

COVERT

| SCTV | 9.2 | 18.0 | 23.3 | 31.7 | 41.4 | 53.9 | 67.0 | 78.1 | 86.5 |
|---|---|---|---|---|---|---|---|---|---|

## Fig.33

| DOT PERCENT (BEFORE ADJUSTMENT) | 10 | 20 | 30 | 40 | 50 | 60 | 70 | 80 | 90 |
|---|---|---|---|---|---|---|---|---|---|

↓ ~601

| SCTV (BEFORE ADJUSTMENT) | 9.2 | 18.0 | 23.3 | 31.7 | 41.4 | 53.9 | 67.0 | 78.1 | 86.5 |
|---|---|---|---|---|---|---|---|---|---|

↓ ~602

| SCTV (AFTER ADJUSTMENT) | 16.1 | 23.3 | 31.7 | 41.4 | 53.9 | 64.1 | 73.4 | 83.0 | 90.2 |
|---|---|---|---|---|---|---|---|---|---|

↓ ~603

| DOT PERCENT (AFTER ADJUSTMENT) | 17.8 | 30.0 | 40.0 | 50.0 | 60.0 | 67.8 | 75.8 | 85.8 | 92.7 |
|---|---|---|---|---|---|---|---|---|---|

# Fig.34

REFERENCE COLOR:
COLOR CO1

REFERENCE COLOR:
COLOR CO2

DOT PERCENT

SCTV

DOT PERCENT

65

66

## Fig.35

| DOT PERCENT (BEFORE ADJUSTMENT) | 10 | 20 | 30 | 40 | 50 | 60 | 70 | 80 | 90 |
|---|---|---|---|---|---|---|---|---|---|

↓ — 611

| SCTV (BEFORE ADJUSTMENT WITH REFERENCE COLOR CO1) | 9.2 | 18.0 | 23.3 | 31.7 | 41.4 | 53.9 | 67.0 | 78.1 | 86.5 |
|---|---|---|---|---|---|---|---|---|---|

↓ — 612

| SCTV (AFTER ADJUSTMENT WITH REFERENCE COLOR CO1) | 16.1 | 23.3 | 31.7 | 41.4 | 53.9 | 64.1 | 73.4 | 83.0 | 90.2 |
|---|---|---|---|---|---|---|---|---|---|

↓ — 613

| SCTV (BEFORE ADJUSTMENT WITH REFERENCE COLOR CO2) | 16.1 | 23.3 | 31.7 | 41.4 | 53.9 | 64.1 | 73.4 | 83.0 | 90.2 |
|---|---|---|---|---|---|---|---|---|---|

↓ — 614

| SCTV (AFTER ADJUSTMENT WITH REFERENCE COLOR CO2) | 14.9 | 22.0 | 30.5 | 40.9 | 53.0 | 63.7 | 72.9 | 82.7 | 90.1 |
|---|---|---|---|---|---|---|---|---|---|

↓ — 615

| DOT PERCENT (AFTER ADJUSTMENT) | 12.3 | 23.2 | 35.1 | 47.5 | 54.9 | 63.2 | 72.8 | 82.0 | 91.5 |
|---|---|---|---|---|---|---|---|---|---|

EP 4 679 811 A2

# Fig.36

```
        ┌────────────────────────────────────────┐
        │   COLOR CHART DATA CORRECTION PROCESS   │
        └────────────────────────────────────────┘
                            │
S421    ┌────────────────────────────────────────┐
        │      CONVERT DOT PERCENTS TO SCTVs       │
        └────────────────────────────────────────┘
                            │
S422    ┌────────────────────────────────────────┐
        │              ADJUST SCTVs                │
        └────────────────────────────────────────┘
                            │
S423    ┌────────────────────────────────────────┐
        │      CONVERT SCTVs TO DOT PERCENTS       │
        └────────────────────────────────────────┘
                            │
S424    ┌────────────────────────────────────────┐
        │       CORRECT SPECTRAL REFLECTANCES      │
        └────────────────────────────────────────┘
                            │
S425    ┌────────────────────────────────────────┐
        │    DISPLAY BASED ON DATA AFTER CORRECTION │
        └────────────────────────────────────────┘
                            │
S426    ┌────────────────────────────────────────┐
        │          CHANGE REFERENCE COLOR          │
        └────────────────────────────────────────┘
                            │
S427    ┌────────────────────────────────────────┐
        │              ADJUST SCTVs                │
        └────────────────────────────────────────┘
                            │
S428    ┌────────────────────────────────────────┐
        │      CONVERT SCTVs TO DOT PERCENTS       │
        └────────────────────────────────────────┘
                            │
S429    ┌────────────────────────────────────────┐
        │       CORRECT SPECTRAL REFLECTANCES      │
        └────────────────────────────────────────┘
                            │
S430    ┌────────────────────────────────────────┐
        │   DISPLAY BASED ON DATA AFTER CORRECTION │
        └────────────────────────────────────────┘
                            │
                        ┌────────┐
                        │  END   │
                        └────────┘
```

# Fig.37

## Fig.38

| INPUT DOT PERCENT | 10 | 20 | 30 | 40 | 50 | 60 | 70 | 80 | 90 |
|---|---|---|---|---|---|---|---|---|---|
| SCTV (BEFORE ADJUSTMENT) | 9.2 | 18.0 | 23.3 | 31.7 | 41.4 | 53.9 | 67.0 | 78.1 | 86.5 |
| SCTV (AFTER ADJUSTMENT) | 16.1 | 23.3 | 31.7 | 41.4 | 53.9 | 64.1 | 73.4 | 83.0 | 90.2 |

68

EP 4 679 811 A2

# Fig.39

# Fig.40

540

544

### SELECTION OF REFERENCE COLOR

| | COLOR | COLOR DIFFERENCE | |
|---|---|---|---|
| ○ | C123 | 2.25 | ∧ |
| ○ | P206 | 2.76 | ▨ |
| ◉ | C398 | 2.84 | |
| ○ | F003 | 2.88 | |
| ○ | P888 | 3.09 | |
| ○ | CW62 | 4.37 | |
| ○ | K305 | 4.57 | |
| ○ | PK82 | 5.27 | ∨ |

546

542

# Fig.41

| 12. 3 |
|---|
| 23. 2 |
| 35. 1 |
| 47. 5 |
| 54. 9 |
| 63. 2 |
| 72. 8 |
| 82. 0 |
| 91. 5 |

82

DOT PERCENT
AFTER ADJUSTMENT

CALCULATION OF
SPECTRAL REFLECTANCES

81

| 0 | 0. 01 | ・・・・ | ・・・・ | ・・・・・・・・・・・・・・ | ・・・・ | ・・・・ | ・・・・ |
|---|---|---|---|---|---|---|---|
| 10 | 0. 02 | ・・・・ | ・・・・ | ・・・・・・・・・・・・・・ | ・・・・ | ・・・・ | ・・・・ |
| 20 | 0. 03 | ・・・・ | ・・・・ | ・・・・・・・・・・・・・・ | ・・・・ | ・・・・ | ・・・・ |
| 30 | 0. 04 | ・・・・ | ・・・・ | ・・・・・・・・・・・・・・ | ・・・・ | ・・・・ | ・・・・ |
| 40 | 0. 05 | ・・・・ | ・・・・ | ・・・・・・・・・・・・・・ | ・・・・ | ・・・・ | ・・・・ |
| 50 | 0. 06 | ・・・・ | ・・・・ | ・・・・・・・・・・・・・・ | ・・・・ | ・・・・ | ・・・・ |
| 60 | 0. 07 | ・・・・ | ・・・・ | ・・・・・・・・・・・・・・ | ・・・・ | ・・・・ | ・・・・ |
| 70 | 0. 09 | ・・・・ | ・・・・ | ・・・・・・・・・・・・・・ | ・・・・ | ・・・・ | ・・・・ |
| 80 | 0. 10 | ・・・・ | ・・・・ | ・・・・・・・・・・・・・・ | ・・・・ | ・・・・ | ・・・・ |
| 90 | 0. 12 | ・・・・ | ・・・・ | ・・・・・・・・・・・・・・ | ・・・・ | ・・・・ | ・・・・ |
| 100 | 0. 14 | ・・・・ | ・・・・ | ・・・・・・・・・・・・・・ | ・・・・ | ・・・・ | ・・・・ |

DOT PERCENT
BEFORE ADJUSTMENT

SPECTRAL REFLECTANCES

EP 4 679 811 A2

Fig.42

# Fig.43

COLOR CHART DATA CORRECTION PROCESS

S441 | ADJUST DOT PERCENTS

S442 | CORRECT SPECTRAL REFLECTANCES

S443 | DISPLAY BASED ON DATA AFTER CORRECTION

S444 | CHANGE REFERENCE COLOR

S445 | CALCULATE SPECTRAL REFLECTANCES

S446 | CONVERT DOT PERCENTS TO SCTVs

S447 | CONVERT SCTVs TO DOT PERCENTS

S448 | ADJUST DOT PERCENTS

S449 | CORRECT SPECTRAL REFLECTANCES

S450 | DISPLAY BASED ON DATA AFTER CORRECTION

END

# Fig.44

| DOT PERCENT<br>(BEFORE ADJUSTMENT WITH REFERENCE COLOR C01) | 10 | 20 | 30 | 40 | 50 | 60 | 70 | 80 | 90 |
|---|---|---|---|---|---|---|---|---|---|

ADJUSTMENT

| DOT PERCENT BEING ADJUSTED | 18 | 30 | 40 | 50 | 60 | 68 | 76 | 86 | 93 |
|---|---|---|---|---|---|---|---|---|---|

88

EP 4 679 811 A2

# Fig.45

| DOT PERCENT (%) | CIELAB VALUE | | |
|---|---|---|---|
| | L* | a* | b* |
| 0 | . . . . | . . . . | . . . . |
| 1 | . . . . | . . . . | . . . . |
| 2 | . . . . | . . . . | . . . . |
| 3 | . . . . | . . . . | . . . . |
| 4 | . . . . | . . . . | . . . . |
| ⋮ | ⋮ | ⋮ | ⋮ |
| 96 | . . . . | . . . . | . . . . |
| 97 | . . . . | . . . . | . . . . |
| 98 | . . . . | . . . . | . . . . |
| 99 | . . . . | . . . . | . . . . |
| 100 | . . . . | . . . . | . . . . |

# Fig.46

```
                  ( COLOR CHART DATA CORRECTION PROCESS )
                                   │
S461                      ADJUST DOT PERCENTS
                                   │
S462                  CORRECT SPECTRAL REFLECTANCES
                                   │
S463              DISPLAY BASED ON DATA AFTER CORRECTION
                                   │
S464                    CHANGE REFERENCE COLOR
                                   │
S465     CALCULATE SPECTRAL REFLECTANCES FOR REFERENCE COLOR BEFORE CHANGE
                                   │
S466       CALCULATE CIELAB VALUES FOR REFERENCE COLOR BEFORE CHANGE
                                   │
S467     CALCULATE SPECTRAL REFLECTANCES FOR REFERENCE COLOR AFTER CHANGE
                                   │
S468       CALCULATE CIELAB VALUES FOR REFERENCE COLOR AFTER CHANGE
                                   │
S469                    CALCULATE COLOR DIFFERENCE
                                   │
S470              DETERMINE DOT PERCENTS TO BE ADOPTED
                                   │
S471                      ADJUST DOT PERCENTS
                                   │
S472                  CORRECT SPECTRAL REFLECTANCES
                                   │
S473              DISPLAY BASED ON DATA AFTER CORRECTION
                                   │
                                ( END )
```

# Fig.47

```
             COLOR CHART DATA CORRECTION PROCESS

S481      CONVERT DOT PERCENTS TO SCTVs

S482   SELECT PLURALITY OF REFERENCE CANDIDATE COLORS

S483             ADJUST SCTVs

S484      CONVERT SCTVs TO DOT PERCENTS

S485      CALCULATE SPECTRAL REFLECTANCES

S486   DISPLAY PLURALITY OF ADJUSTMENT RESULTS

S487        SELECT ADJUSTMENT RESULT

S488       CORRECT COLOR CHART DATA

                      END
```

# Fig.48

550

| SELECT ONE FROM BELOW | ADJUSTMENT RESULTS | |
|---|---|---|
| ◉ C 0 1 | | ∧ ▪ |
| ○ C 0 2 | | |
| ○ C 0 3 | | |
| ○ C 0 4 | | ∨ |

551　　　　552

Fig.49

## Fig.50

FOREGROUND COLOR
$(X_f, Y_f, Z_f)$

BACKGROUND COLOR
$(X_b, Y_b, Z_b)$

## Fig.51

PA92    PA95    PA94

100% 90% 80% 70% 60% 50% 40% 30% 20% 10% 0%

PA91    PA93

# Fig.52

START

S900 | PRINT CxF CHART

S910 | CALCULATE OVERPRINT COEFFICIENT

S920 | OBTAIN $X_b$, $Y_b$, AND $Z_b$

S930 | OBTAIN $X_f$, $Y_f$, AND $Z_f$

S940 | CALCULATE OVERPRINT PREDICTION VALUE

END

# Fig.53

$X$

P91

L91

P92

$X_b \times X_f$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020102807 A